# EUROPEAN PATENT APPLICATION

(11) **EP 4 585 655 A1**
(43) Date of publication of application: **16.07.2025**
(21) Application number: 23877377.4
(22) Date of filing: 13.10.2023
(51) Int. Cl.: C08L 101/12, C07C 39/15, C07C 43/205, C08K 5/04, C08L 65/00

(54) **PILLARARENE COMPLEX**

(30) Priority: 14.10.2022 JP 2022165860
(71) Applicant: DAIKIN INDUSTRIES, LTD., Osaka-shi, Osaka 530-0001 (JP); Kyoto University, Kyoto-shi, Kyoto 606-8501 (JP)
(72) Inventor: TANAKA, Yoshito, Osaka-Shi, Osaka 530-0001 (JP); YAMAGUCHI, Shuhei, Osaka-Shi, Osaka 530-0001 (JP); KOMORI, Masaji, Osaka-Shi, Osaka 530-0001 (JP); YAMAUCHI, Akiyoshi, Osaka-Shi, Osaka 530-0001 (JP); KISHIKAWA, Yosuke, Osaka-Shi, Osaka 530-0001 (JP); OGOSHI, Tomoki, Kyoto-shi, Kyoto 606-8501 (JP); KURAKAKE, Yuta, Kyoto-shi, Kyoto 606-8501 (JP); SOBUE, Tatsuki, Kyoto-shi, Kyoto 606-8501 (JP); ONISHI, Katsuto, Kyoto-shi, Kyoto 606-8501 (JP); KATO, Kenichi, Kyoto-shi, Kyoto 606-8501 (JP); OHTANI, Shunsuke, Kyoto-shi, Kyoto 606-8501 (JP)
(74) Representative: Hoffmann Eitle
(86) International application number: PCT/JP2023/037279
(87) International publication number: WO 2024/080376

(57) **Abstract**

An object of the present disclosure is to provide a composite having excellent heat resistance, particularly, pyrolysis resistance and allowing easy introduction of a functional group thereinto.

A composite comprising: a polymer; and one or more cyclic compounds that comprise the polymer, wherein
the polymer has at least one selected from a glass transition temperature and a melting point at 130°C or higher,
the cyclic compound comprises a compound represented by the following formula (I): 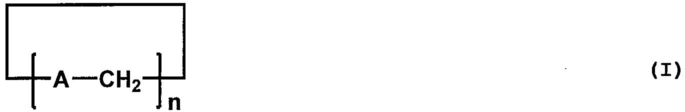 wherein
A independently represents a divalent C₄₋₅₀ organic group containing one or more selected from -OR and -CO-,
R independently represents an organic group optionally containing one or more fluorine atoms, or a hydrogen atom, and
n represents an integer of 4 to 20.

## Description

### Technical Field

The present disclosure relates to a pillararene composite.

### Background Art

As composites obtained by combining a cyclic compound and a polymer, rotaxanes or pseudorotaxanes are known. A rotaxane is a structure having a cyclic compound, a polymer that penetrates through the ring of the cyclic compound, and a blocked portion disposed at an end of the polymer. A pseudorotaxane is a structure having a cyclic compound and a polymer that penetrates through the ring of the cyclic compound but having no blocked portion at a polymer end.

As such composites, Patent Literature 1 describes a clathrate compound including a fluoropolyether molecule as a guest compound in cyclodextrin.

Patent Literature 2 describes a polyrotaxane including polyethylene glycol, a pillararene that includes the polyethylene glycol in a skewered shape, and adamantane groups disposed at both ends of the polyethylene glycol.

Non Patent Literature 3 describes a rotaxane including a pillararene and a polyethylene or polypropylene included in the pillararene.

### Citation List

### Patent Literature

Patent Literature 1: International Publication No. WO 2007/058247
Patent Literature 2: JP 2021-138635 A

### Non Patent Literature

Non Patent Literature 1: Tomoki Ogoshi et al., "Extension of polyethylene chains by formation of polypseudorotaxane structures with perpentylated piller[5]arenes", Polymer Journal (2014) 46, 77 to 81

### Summary of Invention

### Technical Problem

Conventionally known composites are not capable of sufficiently satisfying heat resistance, particularly, pyrolysis resistance, and functional groups that can be introduced into cyclic compounds are limited.

The present disclosure has been made in consideration of such a circumstance, and an object of the present disclosure is to provide a composite having excellent heat resistance, particularly, pyrolysis resistance and allowing easy introduction of a functional group thereinto.

### Solution to Problem

The present disclosure includes the following aspects.
[1] A composite comprising: a polymer; and one or more cyclic compounds that include the polymer, wherein
   the polymer has at least one selected from a glass transition temperature and a melting point at 130°C or higher,
   the cyclic compound comprises a compound represented by the following formula (I): 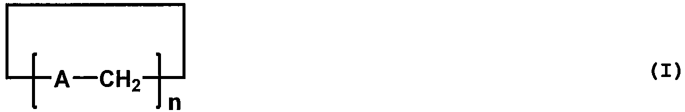 wherein
      A independently represents a divalent C₄₋₅₀ organic group comprising one or more selected from -OR and -CO- ,
      R independently represents an organic group optionally comprising one or more fluorine atoms, or a hydrogen atom , and
      n represents an integer of 4 to 20.
[2] The composite according to [1], wherein the cyclic compound comprises a compound represented by any of the following formulae (1) to (3): 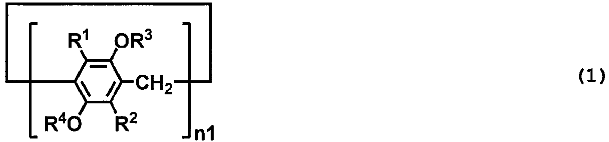 wherein
   R¹ independently represents a hydrogen atom or an organic group ,
   R² independently represents a hydrogen atom or an organic group ,
   R³ independently represents a hydrogen atom or an organic group ,
   R⁴ independently represents a hydrogen atom or an organic group , and
   n1 is an integer of 4 to 20, 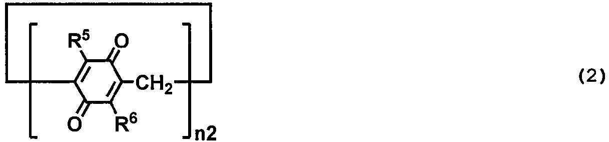 wherein
      R⁵ independently represents a hydrogen atom or an organic group ,
      R⁶ independently represents a hydrogen atom or an organic group , and
      n2 is an integer of 4 to 20, 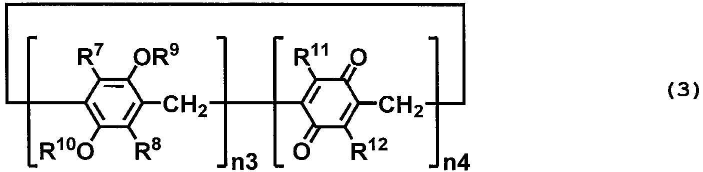 wherein
         R⁷ independently represents a hydrogen atom or an organic group ,
         R⁸ independently represents a hydrogen atom or an organic group ,
         R⁹ independently represents a hydrogen atom or an organic group ,
         R¹⁰ independently represents a hydrogen atom or an organic group ,
         R¹¹ independently represents a hydrogen atom or an organic group ,
         R¹² independently represents a hydrogen atom or an organic group ,
         n3 is an integer of 1 to 19,
         n4 is an integer of 1 to 19,
         a sum of n3 and n4 is 4 to 20, and
         an occurrence order of a unit enclosed in parentheses with n3 or n4 is arbitrary in the formula (3).
[3] The composite according to [2], wherein one or more selected from R¹ to R⁴ in the formula (1) is a fluorine-containing organic group.
[4] The composite according to [2], wherein one or more selected from R³ and R⁴ in the formula (1) is a hydrogen atom.
[5] The composite according to any one of [1] to [4], wherein the cyclic compound is a compound represented by any of the following formulae (1-A), (2-A), and (3-A): 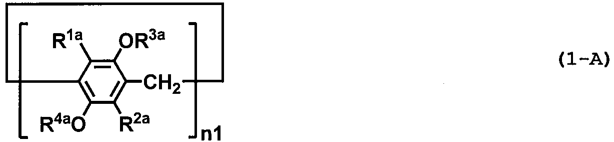 wherein
   R^{1a} independently represents a C₁₋₃₀ alkyl group optionally having one or more substituents or a hydrogen atom ,
   R^{2a} independently represents a C₁₋₃₀ alkyl group optionally having one or more substituents or a hydrogen atom ,
   R^{3a} independently represents a C₁₋₃₀ alkyl group optionally having one or more substituents or a hydrogen atom ,
   R^{4a} independently represents a C₁₋₃₀ alkyl group optionally having one or more substituents or a hydrogen atom , and
   n1 is an integer of 4 to 20, 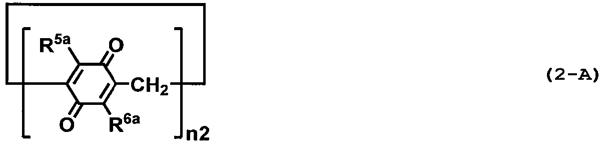 wherein
      R^{5a} independently represents a C₁₋₃₀ alkyl group optionally having one or more substituents or a hydrogen atom ,
      R^{6a} independently represents a C₁₋₃₀ alkyl group optionally having one or more substituents or a hydrogen atom , and
      n2 is an integer of 4 to 20, 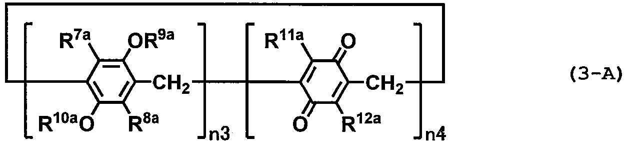 wherein
         R^{7a} independently represents a C₁₋₃₀ alkyl group optionally having one or more substituents or a hydrogen atom ,
         R^{8a} independently represents a C₁₋₃₀ alkyl group optionally having one or more substituents or a hydrogen atom ,
         R^{9a} independently represents a C₁₋₃₀ alkyl group optionally having one or more substituents or a hydrogen atom ,
         R^{10a} independently represents a C₁₋₃₀ alkyl group optionally having one or more substituents or a hydrogen atom ,
         R^{11a} independently represents a C₁₋₃₀ alkyl group optionally having one or more substituents or a hydrogen atom ,
         R^{12a} independently represents a C₁₋₃₀ alkyl group optionally having one or more substituents or a hydrogen atom ,
         n3 is an integer of 1 to 19,
         n4 is an integer of 1 to 19, and
         a sum of n3 and n4 is 4 to 20,
         provided that an occurrence order of a unit enclosed in parentheses with n3 or n4 is arbitrary in the formula (3-A).
[6] The composite according to any one of [1] to [5], wherein the cyclic compound has a pyrolysis temperature at 250°C or higher.
[7] The composite according to any one of [1] to [6], wherein the polymer has at least one selected from a glass transition temperature and a melting point at 140°C or higher.
[8] The composite according to any one of [1] to [7], wherein the polymer is a linear polymer optionally having a substituent.
[9] The composite according to any one of [1] to [8], wherein the polymer is a linear polymer having one selected from the group consisting of a carbonyl group, an ester group, an amide group, an imide group, and an ether group in a repeating structural unit.
[10] The composite according to any one of [1] to [9], wherein the polymer is a linear polymer having an aromatic ring in a repeating structural unit.
[11] The composite according to any one of [1] to [10], wherein the polymer comprises a polyester.
[12] The composite according to any one of [1] to [11], wherein the polymer comprises a fluorine-containing polymer.
[13] The composite according to any one of [1] to [12], wherein the polymer comprises polyvinylidene fluoride.
[14] The composite according to any one of [1] to [13], wherein a pyrolysis temperature is 170°C or higher.
[15] The composite according to any one of [1] to [14], wherein tₓ - t_{y} is 50°C or more, where tₓ indicates a pyrolysis temperature of the composite, and t_{y} indicates a lower one of a pyrolysis temperature of the polymer and a pyrolysis temperature of the cyclic compound.
[16] The composite according to any one of [1] to [15], wherein a proportion of the cyclic compound is 0.01 mass% or more and 99 mass% or less in a total of 100 parts by mass of the polymer and the cyclic compound.
[17] A method for producing the composite according to any one of [1] to [16], the method comprising:
   contacting the polymer and the cyclic compound represented by the formula (I) in an absence of a solvent to obtain the composite.
[18] The production method according to [17], wherein the contacting is performed at a temperature higher than at least one of a glass transition temperature and a melting point of the polymer.
[19] A composition comprising the composite according to any one of [1] to [16].
[20] The composition according to [19], which is in a powder form.
[21] The composition according to [19], which is in a liquid form.

### Advantageous Effects of Invention

The composite of the present disclosure has excellent heat resistance, particularly, pyrolysis resistance and allows easy introduction of a functional group thereinto.

### Brief Description of Drawings

[FIG. 1] FIG. 1 is an NMR chart of the composite obtained in Example 1.
[FIG. 2] FIG. 2 is an NMR chart of the composite obtained in Example 2.
[FIG. 3] FIG. 3 is an NMR chart of the purified product obtained in Comparative Example 1.
[FIG. 4] FIG. 4 is a NMR chart of the purified product obtained in Comparative Example 2.
[FIG. 5] FIG. 5 is a DSC chart of each composite obtained in Example 13.
[FIG. 6] FIG. 6 is a DSC chart of each composite obtained in Example 14.
[FIG. 7] FIG. 7 is a DSC chart of each composite obtained in Example 15.
[FIG. 8] FIG. 8 is an X-ray diffraction chart of the each composite obtained in Example 13.
[FIG. 9] FIG. 9 is an X-ray diffraction chart of each composite obtained in Example 14.
[FIG. 10] FIG. 9 is a FT-IR chart of the composite and the purified product obtained in Example 21.

### Description of Embodiments

### <Composite>

A composite of the present disclosure comprises a polymer and one or more cyclic compounds that include the polymer, and the cyclic compound comprises a compound represented by the following formula (I): 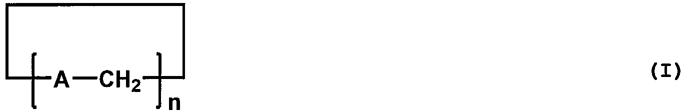 wherein
A independently represents a divalent C₄₋₅₀ organic group comprising one or more selected from -OR and -CO- ,
R independently represents an organic group that may comprise one or more fluorine atoms or a hydrogen atom , and
n represents an integer of 4 to 20.

The composite of the present disclosure comprises a polymer and the above-described cyclic compound and thus has favorable heat resistance, particularly, pyrolysis resistance, and allows easy introduction of a functional group thereinto. The composite of the present disclosure is expected to be easily mixed with a variety of resins or the like while maintaining the properties, such as heat resistance or hydrophobicity, of the polymer. Furthermore, in the composite of the present disclosure, the cyclic compound is not fixed to the polymer, and is thus movable even in the case of, for example, having been mixed with a resin and expected to be capable of exhibiting characteristics, such as a shock-absorbing property.

In the present disclosure, inclusion means that at least a part of the polymer is present in the ring of the cyclic compound. In one aspect, the polymer may penetrate through the ring of the cyclic compound. In addition, the number of the cyclic compounds that include one polymer can be 1 or more, and the number is preferably 1 in one aspect and preferably 2 or more in another aspect. The upper limit thereof is 5 or less or 3 or less on average and preferably 1 or less per repeating unit of the polymer. For example, in a case where the number of the repeating units of the polymer is indicated by j, the number of the cyclic compounds in one composite is preferably 5 × j or less, more preferably 3 × j or less, and still more preferably j or less.

In the formula (I), A independently represents a divalent C₄₋₅₀ organic group and comprises one or more selected from -OR and -CO-.

The C₄₋₅₀ organic group can be preferably a C₄₋₂₀ organic group and more preferably a C₄₋₁₀ organic group.

In the present disclosure, a monovalent or divalent "organic group" means a monovalent or divalent group comprising carbon. The monovalent or divalent organic group is not limited and can be a hydrocarbon group or a derivative thereof. The derivative of a hydrocarbon group means a group having one or more of N, O, S, Si, an amide, sulfonyl, a siloxane, carbonyl, carbonyloxy, and the like in an end or molecular chain of the hydrocarbon group. In the case of being simply mentioned, "organic group" means a monovalent organic group.

In addition, in the present disclosure, "hydrocarbon group" means a group comprising carbon and hydrogen that is obtained by eliminating one hydrogen atom from a hydrocarbon. Such a hydrocarbon group is not limited, and examples thereof include C₁₋₂₀ hydrocarbon groups, for example, C₁₋₂₀ aliphatic hydrocarbon groups, C₆₋₂₀ aromatic hydrocarbon groups, and the like. The "aliphatic hydrocarbon group" may be any of a linear, branched, or cyclic group and may be any of a saturated or unsaturated group. In addition, the hydrocarbon group may include one or more ring structures. In addition, the hydrocarbon group may have one or more substituents.

In the present disclosure, the substituent in the "hydrocarbon group" is not limited, and examples thereof include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

"Divalent C₄₋₅₀ organic group" in the divalent organic group comprising one or more selected from -OR and -CO- that is represented by A can be preferably a divalent C₆₋₂₀ aromatic hydrocarbon group or a divalent C₃₋₂₀ alicyclic hydrocarbon group.

The divalent C₆₋₂₀ aromatic hydrocarbon group can be preferably a divalent C₆₋₁₀ aromatic hydrocarbon group, more preferably a divalent C₆₋₈ aromatic hydrocarbon group, and particularly preferably a phenylene group.

The divalent C₃₋₂₀ alicyclic hydrocarbon group may be any of a saturated alicyclic hydrocarbon group and an unsaturated alicyclic hydrocarbon group. The divalent C₃₋₂₀ alicyclic hydrocarbon group can be preferably a divalent C₆₋₁₀ unsaturated alicyclic hydrocarbon group, more preferably a divalent C₆₋₈ unsaturated alicyclic hydrocarbon group, and particularly preferably a cyclohexadienyl group.

The divalent C₄₋₅₀ organic groups comprising one or more selected from -OR and -CO- that is represented by A each independently can be preferably one selected from a divalent C₆₋₂₀ aromatic hydrocarbon group having -OR as a substituent, a C₃₋₂₀ alicyclic hydrocarbon group in which a hydrogen atom bound to the carbon atom constituting the ring is replaced with -OR, and a C₃₋₂₀ alicyclic hydrocarbon group in which -CH₂- constituting the ring is replaced with -CO- and can be more preferably one selected from a divalent C₆₋₁₀ aromatic hydrocarbon group having -OR as a substituent and a C₆₋₁₀ alicyclic hydrocarbon group in which -CH₂- constituting the ring is replaced with -CO- .

The total number of -OR and -CO- that are contained in A is one or more and four or less and preferably two.

R independently represents an organic group that may comprise one or more fluorine atoms or a hydrogen atom .

Examples of the organic group represented by R include an alkyl group, an alkyloxy group, an alkyl ether group, a tosyl group, a triflate group, a phenyl group, and the like, and these groups may have one or more substituents.

The substituent that the organic group represented by R may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group; halogen atoms. Examples of such halogen atoms include a fluorine atom, a chlorine atom, a bromine atom, and an iodine atom, and the halogen atom can be preferably a fluorine atom or a chlorine atom.

The alkyl group in R is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms. Examples of the halogen atoms include a fluorine atom, a chlorine atom, a bromine atom, and an iodine atom, and the halogen atom is preferably a fluorine atom or a chlorine atom.

The alkyloxy group in R is typically a group represented by -O-R²¹ (in the formula, R²¹ is an alkyl group that may have one or more substituents).

The alkyl group in R²¹ may be replaced with the above-described substituent and may be preferably replaced with a fluorine atom. The alkyl group is preferably a C₁₋₃₀ alkyl group that may be replaced with a fluorine atom. The alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

R²¹ is preferably a group represented by -R²²-R²³ (in the formula, R²² is an unsubstituted C₁₋₃₀ alkylene group, preferably a C₁₋₂₀ alkylene group, and more preferably a C₁₋₁₀ alkylene group, and R²³ is a C₁₋₁₀ perfluoroalkyl group and preferably a C₁₋₆ perfluoroalkyl group).

The alkyl ether group in R is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, R preferably represents a C₁₋₃₀ alkyl group that may have one or more substituents or a hydrogen atom.

n is 4 to 20, preferably 4 to 10, more preferably 4 to 7, and still more preferably 5 or 6. In one aspect, n is 5. In addition, in another aspect, n is 6.

The cyclic compound preferably comprises a compound represented by any of the following formulae (1) to (3): 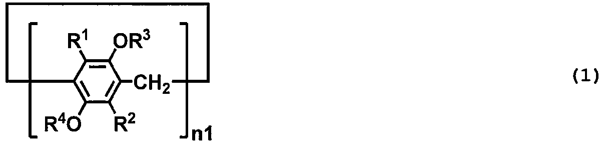 wherein
R¹ independently represents a hydrogen atom or an organic group,
R² independently represents a hydrogen atom or an organic group ,
R³ independently represents a hydrogen atom or an organic group ,
R⁴ independently represents a hydrogen atom or an organic group ,
n1 is an integer of 4 to 20,
in a preferable aspect, one or more selected from R¹ to R⁴ is preferably a fluorine-containing organic group and more preferably an organic group comprising a C₂₋₆ fluoroalkyl group, and
in another preferable aspect, one or more selected from R³ and R⁴ is a hydrogen atom, and R³ and R⁴ can be more preferably hydrogen atoms, 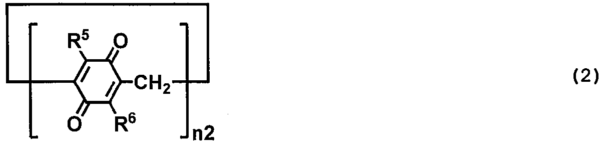 wherein
   R⁵ independently represents a hydrogen atom or an organic group ,
   R⁶ independently represents a hydrogen atom or an organic group , and
   n2 is an integer of 4 to 20, and 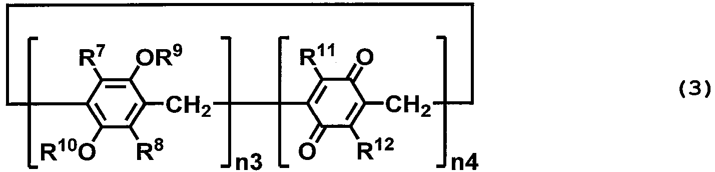 wherein
      R⁷ independently represents a hydrogen atom or an organic group ,
      R⁸ independently represents a hydrogen atom or an organic group ,
      R⁹ independently represents a hydrogen atom or an organic group ,
      R¹⁰ independently represents a hydrogen atom or an organic group ,
      R¹¹ independently represents a hydrogen atom or an organic group ,
      R¹² independently represents a hydrogen atom or an organic group ,
         n3 is an integer of 1 to 19,
      n4 is an integer of 1 to 19,
      the sum of n3 and n4 is 4 to 20, and
      the occurrence order of a unit in parentheses with n3 or n4 is arbitrary in the formula (3).

When the cyclic compound comprises a compound represented by any of the formulae (1) to (3), heat resistance, particularly, pyrolysis resistance is more favorable, introduction of a functional group is easier, and the composite can be more efficiently produced.

In one aspect, the cyclic compound preferably comprises a compound represented by the following formula (1): 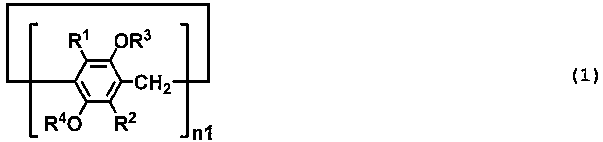 wherein
R¹ independently represents a hydrogen atom or an organic group,
R² independently represents a hydrogen atom or an organic group,
R³ independently represents a hydrogen atom or an organic group,
R⁴ independently represents a hydrogen atom or an organic group , and
n1 is an integer of 4 to 20.

In the formula (1), R¹ independently represents a hydrogen atom or an organic group , R² independently represents a hydrogen atom or an organic group , R³ independently represents a hydrogen atom or an organic group , and R⁴ independently represents a hydrogen atom or an organic group .

Examples of the organic group represented by R¹, R², R³, or R⁴ include an alkyl group, an alkyloxy group, an alkyl ether group, a tosyl group, a triflate group, a phenyl group, a fluorine-containing organic group, and the like, and these groups may have one or more substituents.

The substituent that the organic group represented by R¹, R², R³, or R⁴ may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R¹, R², R³, or R⁴ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R¹, R², R³, or R⁴ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R¹, R², R³, or R⁴ is typically a group represented by - O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R¹, R², R³, or R⁴ is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

The fluorine-containing organic group in R¹, R², R³, or R⁴ can be preferably an organic group having 2 or more carbon atoms and having a fluoroalkyl group and more preferably a fluoroalkyl group or a fluoro(poly)ether group. The fluoroalkyl group is preferably a C₁₋₁₀ fluoroalkyl group and more preferably a C₂₋₆ fluoroalkyl group. Such a fluoroalkyl group may be linear or branched but is preferably linear. Such a fluoroalkyl group is preferably a perfluoroalkyl group. The fluoro(poly)ether group represents a fluoroether group and/or a fluoropolyether group.

In one aspect, the fluorine-containing organic group is a group represented by the following formula:

-(Oₚ₁-R²⁰_{q1})-Rf^{a}

[in the formula:
R²⁰ independently represents a C₁₋₁₀ alkylene group.
Rf^{a} represents a C₁₋₁₀ fluoroalkyl group.
p1 is an integer of 0 to 2.
q1 is an integer of 0 to 3.
In (Oₚ₁-R²⁰_{q1}), the occurrence order of O and R^{11a} is not limited].

The C₁₋₁₀ alkylene group in R²⁰ is preferably a C₁₋₆ alkylene group and more preferably a C₂₋₆ alkylene group. Such an alkylene group may be linear or branched but is preferably linear.

The C₁₋₁₀ fluoroalkyl group in Rf^{a} is preferably a C₁₋₆ fluoroalkyl group. Such a fluoroalkyl group may be linear or branched but is preferably linear. Such a fluoroalkyl group is preferably a perfluoroalkyl group.

p1 is an integer of 0 to 2 and preferably 1 or 2. In one aspect, p1 is 1. In another aspect, p1 is 2.

q1 is an integer of 0 to 3, preferably an integer of 1 to 3, and more preferably 1 or 2. In one aspect, q1 is 1. In another aspect, q1 is 2.

In a preferable aspect, the fluoro(poly)ether group is a group represented by

-O-R²⁰-(O-R²⁰)ᵣ₁-Rf^{a}

wherein
R²⁰ independently represents a C₁₋₁₀ alkylene group.
Rf^{a} represents a C₁₋₁₀ fluoroalkyl group.
r1 is 0 or 1.

In a more preferable aspect, the fluoro(poly)ether group is a group represented by

-O-R²⁰-(O-R²⁰)ᵣ₁-Rf^{a}

wherein
R²⁰ independently represents a C₁₋₁₀ alkylene group.
Rf^{a} represents a C₁₋₁₀ perfluoroalkyl group.
r1 is 0 or 1.

n1 is an integer of 4 to 20, preferably an integer of 4 to 6, and more preferably 5 or 6.

In a particularly preferable aspect,
R¹³ and R¹⁶ are -O-R²⁰-(O-R²⁰)ᵣ₁-Rf^{a}, and R¹⁴ and R¹⁵ are hydrogen atoms, or
R¹⁴ and R¹⁵ are -O-R²⁰-(O-R²⁰)ᵣ₁-Rf^{a}, and R¹³ and R¹⁶ are hydrogen atoms,
R²⁰ is independently a C₁₋₁₀ alkylene group and preferably a C₁₋₆ alkylene group,
Rf^{a} is a C₁₋₁₀ perfluoroalkyl group and preferably a C₁₋₆ perfluoroalkyl group,
r1 is 0 or 1, and
n1 is an integer of 4 to 6 and preferably 5 or 6.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R¹ represents a C₁₋₃₀ alkyl group that may have one or more substituents or a hydrogen atom, R² represents a C₁₋₃₀ alkyl group that may have one or more substituents or a hydrogen atom, R³ represents a C₁₋₃₀ alkyl group that may have one or more substituents or a hydrogen atom, and R⁴ represents a C₁₋₃₀ alkyl group that may have one or more substituents or a hydrogen atom.

In a preferable aspect, one or more selected from R¹ to R⁴ is preferably a fluorine-containing organic group and more preferably an organic group comprising a C₂₋₆ fluoroalkyl group.

In another preferable aspect, one or more selected from R³ and R⁴ is a hydrogen atom, and R³ and R⁴ can be more preferably hydrogen atoms.

n1 is preferably 4 to 20, more preferably 4 to 10, still more preferably 4 to 7, and far still more preferably 5 or 6. In one aspect, n1 is 5. In addition, in another aspect, n1 is 6.

The formula (1) is preferably represented by the following formula (1-A): 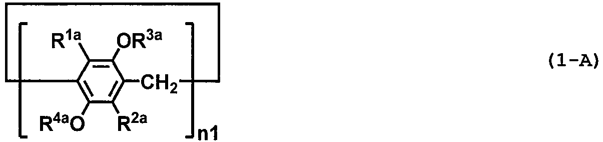 wherein
R^{1a} independently represents a C₁₋₃₀ alkyl group that may have one or more substituents or a hydrogen atom ,
R^{2a} independently represents a C₁₋₃₀ alkyl group that may have one or more substituents or a hydrogen atom ,
R^{3a} independently represents a C₁₋₃₀ alkyl group that may have one or more substituents or a hydrogen atom ,
R^{4a} independently represents a C₁₋₃₀ alkyl group that may have one or more substituents or a hydrogen atom , and
n1 is an integer of 4 to 20.

In the formula (1-A), R^{1a} independently represents a C₁₋₃₀ alkyl group that may have one or more substituents or a hydrogen atom , R^{2a} independently represents a C₁₋₃₀ alkyl group that may have one or more substituents or a hydrogen atom , R^{3a} independently represents a C₁₋₃₀ alkyl group that may have one or more substituents or a hydrogen atom , and R^{4a} independently represents a C₁₋₃₀ alkyl group that may have one or more substituents or a hydrogen atom .

The alkyl group represented by R^{1a}, R^{2a}, R^{3a}, or R^{4a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{1a}, R^{2a}, R^{3a}, or R^{4a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

In another aspect, the formula (1) can be represented by the following formula (1-A'): 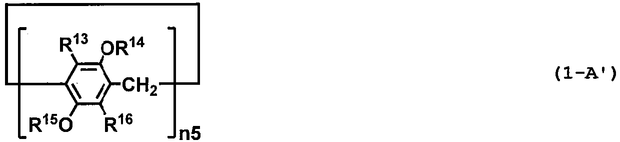 wherein
R¹³ independently represents a hydrogen atom or an organic group ,
R¹⁴ independently represents a hydrogen atom or an organic group ,
R¹⁵ independently represents a hydrogen atom or an organic group ,
R¹⁶ independently represents a hydrogen atom or an organic group ,
n5 is an integer of 4 to 20,
provided that at least one of R¹³, R¹⁴, R¹⁵, and R¹⁶ is a fluorine-containing group, and
at least one of R¹⁴ and R¹⁵ is a hydrogen atom.

In the formula (1-A'), R¹³ independently represents a hydrogen atom or an organic group , R¹⁴ independently represents a hydrogen atom or an organic group , R¹⁵ independently represents a hydrogen atom or an organic group , R¹⁶ independently represents a hydrogen atom or an organic group , and at least one of R¹³, R¹⁴, R¹⁵, and R¹⁶ is a fluorine-containing organic group.

Examples of the organic group represented by R¹³, R¹⁴, R¹⁵, or R¹⁶ include an alkyl group, an alkyloxy group, an alkyl ether group, a tosyl group, a triflate group, a phenyl group, and the like that may be replaced with a substituent.

The substituent is not limited, and examples thereof include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, 5 to 10-membered unsaturated heterocyclyl groups, C₆₋₁₀ aryl groups, and 5 to 10-membered heteroaryl groups, and reactive functional groups that may be replaced with one or more halogen atoms.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

The alkyl group in R¹³, R¹⁴, R¹⁵, or R¹⁶ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R¹³, R¹⁴, R¹⁵, or R¹⁶ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R¹³, R¹⁴, R¹⁵, or R¹⁶ is typically a group represented by -O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

R²¹ is preferably a group represented by -R²²-R²³ (in the formula, R²² is an unsubstituted C₁₋₃₀ alkylene group, preferably a C₁₋₂₀ alkylene group, and more preferably a C₁₋₁₀ alkylene group, and R²³ is a C₁₋₁₀ perfluoroalkyl group and preferably a C₁₋₆ perfluoroalkyl group).

The alkyl ether group is a compound having one or more ethereal oxygen atoms in a molecular chain of the alkyl group. Such an alkyl ether group is typically a group represented by -R^{26f}-R^{27f}(O-R^{28f})ₘ₁-R^{29f}. In the formula, R^{26f} is a single bond or an oxygen atom. R^{27f} is a single bond or a C₁₋₁₀ alkylene group. R^{28f} is a C₁₋₁₀ alkylene group. R^{29f} is a C₁₋₁₀ alkyl group that may be replaced with a fluorine atom or a hydrogen atom. m1 represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

In one aspect, R¹³ and R¹⁶ are each independently an organic group and at least one of R¹³ and R¹⁶ is a fluorine-containing organic group or R¹⁴ and R¹⁵ are each independently an organic group and at least one of R¹⁴ and R¹⁵ is a fluorine-containing organic group.

At least one of R¹⁴ and R¹⁵ is a hydrogen atom, and R¹⁴ and R¹⁵ can be preferably hydrogen atoms. In a case where at least one of R¹⁴ and R¹⁵ is a hydrogen atom, the compound represented by the formula (1-A') has -OH as a proton-donating group. Therefore, the compound can be combined with the polymer comprising one or more selected from -CO-, a nitrogen atom, and a halogen atom.

In one aspect, at least two of R¹³, R¹⁴, R¹⁵, and R¹⁶ are fluorine-containing organic groups, two of R¹³, R¹⁴, R¹⁵, and R¹⁶ are preferably fluorine-containing organic groups, and R¹³ and R¹⁶ can be more preferably fluorine-containing organic groups.

In one aspect, R¹⁴ and R¹⁵ are hydrogen atoms or R¹³ and R16 are hydrogen atoms.

In a preferable aspect, R¹³ and R¹⁶ are each independently a fluorine-containing organic group, and R¹⁴ and R¹⁵ are hydrogen atoms.

The fluorine-containing organic group can be preferably an organic group having 2 or more carbon atoms and having a fluoroalkyl group and more preferably a fluoroalkyl group or a fluoro(poly)ether group. The fluoroalkyl group is preferably a C₁₋₁₀ fluoroalkyl group and more preferably a C₂₋₆ fluoroalkyl group. Such a fluoroalkyl group may be linear or branched but is preferably linear. Such a fluoroalkyl group is preferably a perfluoroalkyl group. The fluoro(poly)ether group represents a fluoroether group and/or a fluoropolyether group.

In one aspect, the fluorine-containing organic group is a group represented by the following formula:

-(Oₚ₁-R²⁰_{q1})-Rf^{a}

wherein
R²⁰ independently represents a C₁₋₁₀ alkylene group.
Rf^{a} represents a C₁₋₁₀ fluoroalkyl group.
p1 is an integer of 0 to 2.
ql is an integer of 0 to 3.
In (Oₚ₁-R²⁰_{q1}), the occurrence order of O and R^{11a} is not limited.

The C₁₋₁₀ alkylene group in R²⁰ is preferably a C₁₋₆ alkylene group and more preferably a C₂₋₆ alkylene group. Such an alkylene group may be linear or branched but is preferably linear.

The C₁₋₁₀ fluoroalkyl group in Rf^{a} is preferably a C₁₋₆ fluoroalkyl group. Such a fluoroalkyl group may be linear or branched but is preferably linear. Such a fluoroalkyl group is preferably a perfluoroalkyl group.

p1 is an integer of 0 to 2 and preferably 1 or 2. In one aspect, p1 is 1. In another aspect, p1 is 2.

q1 is an integer of 0 to 3, preferably an integer of 1 to 3, and more preferably 1 or 2. In one aspect, q1 is 1. In another aspect, q1 is 2.

In a preferable aspect, the fluoro(poly)ether group is a group represented by

-O-R²⁰-(O-R²⁰)ᵣ₁-Rf^{a}

[in the formula:
R²⁰ independently represents a C₁₋₁₀ alkylene group.
Rf^{a} represents a C₁₋₁₀ fluoroalkyl group.
r1 is 0 or 1.].

In a more preferable aspect, the fluoro(poly)ether group is a group represented by

-O-R²⁰-(O-R²⁰)ᵣ₁-Rf^{a}

[in the formula:
R²⁰ independently represents a C₁₋₁₀ alkylene group.
Rf^{a} represents a C₁₋₁₀ perfluoroalkyl group.
r1 is 0 or 1.].

n1 is an integer of 4 to 20, preferably an integer of 4 to 6, and more preferably 5 or 6.

In a particularly preferable aspect,
R¹³ and R¹⁶ are -O-R²⁰-(O-R²⁰)ᵣ₁-Rf^{a}, and R¹⁴ and R¹⁵ are hydrogen atoms, or
R¹⁴ and R¹⁵ are -O-R²⁰-(O-R²⁰)ᵣ₁-Rf^{a}, and R¹³ and R¹⁶ are hydrogen atoms,
R²⁰ is independently a C₁₋₁₀ alkylene group and preferably a C₁₋₆ alkylene group,
Rf^{a} is a C₁₋₁₀ perfluoroalkyl group and preferably a C₁₋₆ perfluoroalkyl group,
r1 is 0 or 1, and
n1 is an integer of 4 to 6 and preferably 5 or 6.

The compound represented by the formula (1-A') can be obtained by converting a substituent in pillar[n]arene into a fluorine-containing organic group. Typically, the compound represented by the formula (1-A') can be obtained by introducing a hydroxyl group into a predetermined position in pillar[n]arene and reacting the hydroxyl group and a tosylate, halide, or the like of an organic group having 2 or more carbon atoms and having a fluoroalkyl group.

In one aspect, it is preferable that R^{1a} and R^{2a} are hydrogen atoms and R^{3a} and R^{4a} are hydrogen atoms or methyl groups.

In another aspect, the cyclic compound preferably comprises a compound represented by the following formula (2): 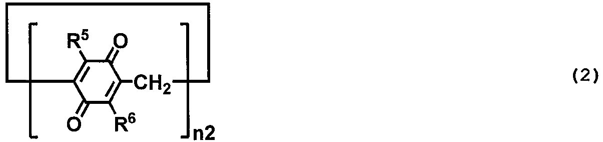 wherein
R⁵ independently represents a hydrogen atom or an organic group ,
R⁶ independently represents a hydrogen atom or an organic group , and
n2 is an integer of 4 to 20.

In the formula (2), R⁵ independently represents a hydrogen atom or an organic group , and R⁶ independently represents a hydrogen atom or an organic group.

Examples of the organic group represented by R⁵or R⁶ include an alkyl group, an alkyloxy group, an alkyl ether group, a tosyl group, a triflate group, a phenyl group, and the like, and these groups may have one or more substituents.

The substituent that the organic group represented by R⁵ or R⁶ may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R⁵ or R⁶ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R⁵ or R⁶ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R⁵ or R⁶ is typically a group represented by -O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R⁵ or R⁶ is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R⁵ represents a C₁₋₃₀ alkyl group that may have one or more substituents or a hydrogen atom and R⁶ represents a C₁₋₃₀ alkyl group that may have one or more substituents or a hydrogen atom.

n2 is preferably 4 to 20, more preferably 4 to 10, still more preferably 4 to 7, and far still more preferably 5 or 6. In one aspect, n2 is 5. In addition, in another aspect, n2 is 6.

The formula (2) is preferably represented by the following formula (2-A): 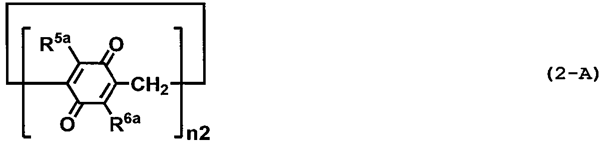 wherein
R^{5a} independently represents a C₁₋₃₀ alkyl group that may have one or more substituents or a hydrogen atom ,
R^{6a} independently represents a C₁₋₃₀ alkyl group that may have one or more substituents or a hydrogen atom , and
n2 is an integer of 4 to 20.

In the formula (2-A), R^{5a} independently represents a C₁₋₃₀ alkyl group that may have one or more substituents or a hydrogen atom , and R^{6a} independently represents a C₁₋₃₀ alkyl group that may have one or more substituents or a hydrogen atom .

The alkyl group in R^{5a} or R^{6a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{5a} or R^{6a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

In one aspect, R^{5a} and R^{6a} are preferably hydrogen atoms.

Furthermore, in another aspect, the cyclic compound preferably comprises a compound represented by the following formula (3): 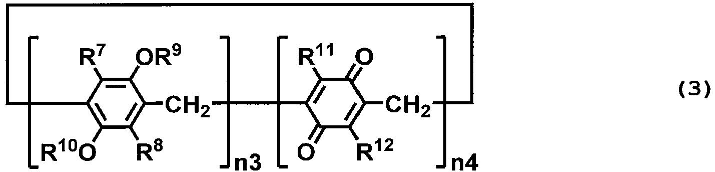 wherein
R⁷ independently represents a hydrogen atom or an organic group ,
R⁸ independently represents a hydrogen atom or an organic group ,
R⁹ independently represents a hydrogen atom or an organic group ,
R¹⁰ independently represents a hydrogen atom or an organic group ,
R¹¹ independently represents a hydrogen atom or an organic group ,
R¹² independently represents a hydrogen atom or an organic group ,
n3 is an integer of 1 to 19,
n4 is an integer of 1 to 19,
the sum of n3 and n4 is 4 to 20, and
the occurrence order of a unit in parentheses with n3 or n4 is arbitrary in the formula (3).

In the formula (3), R⁷ independently represents a hydrogen atom or an organic group , R⁸ independently represents a hydrogen atom or an organic group , R⁹ independently represents a hydrogen atom or an organic group , R¹⁰ independently represents a hydrogen atom or an organic group , R¹¹ independently represents a hydrogen atom or an organic group , and R¹² independently represents a hydrogen atom or an organic group .

Examples of the organic group represented by R⁷, R⁸, R⁹, R¹⁰, R¹¹ or R¹² include an alkyl group, an alkyloxy group, an alkyl ether group, a tosyl group, a triflate group, a phenyl group, and the like, and these groups may have one or more substituents.

The substituent that the organic group represented by R⁷, R⁸, R⁹, R¹⁰, R¹¹ or R¹² may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R⁷, R⁸, R⁹, R¹⁰, R¹¹ or R¹² is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R⁷, R⁸, R⁹, R¹⁰, R¹¹ or R¹² include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R⁷, R⁸, R⁹, R¹⁰, R¹¹ or R¹² is typically a group represented by -O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R⁷, R⁸, R⁹, R¹⁰, R¹¹ or R¹² is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group represented by R⁷, R⁸, R⁹, R¹⁰, R¹¹ or R¹² can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R⁷ represents a C₁₋₃₀ alkyl group that may have one or more substituents or a hydrogen atom, R⁸ represents a C₁₋₃₀ alkyl group that may have one or more substituents or a hydrogen atom, R⁹ represents a C₁₋₃₀ alkyl group that may have one or more substituents or a hydrogen atom, R¹⁰ represents a C₁₋₃₀ alkyl group that may have one or more substituents or a hydrogen atom, R¹¹ represents a C₁₋₃₀ alkyl group that may have one or more substituents or a hydrogen atom, and R¹² represents a C₁₋₃₀ alkyl group that may have one or more substituents or a hydrogen atom.

n3 is preferably 1 to 19, more preferably 1 to 9, still more preferably 1 to 6, and far still more preferably 1 to 5. n4 is preferably 1 to 19, more preferably 1 to 9, still more preferably 1 to 6, and far still more preferably 1 to 5. n3 + n4 is preferably 4 to 20, more preferably 4 to 10, still more preferably 4 to 7, and far still more preferably 5 or 6.

The formula (3) is preferably represented by the following formula (3-A): 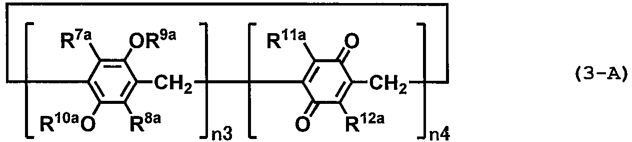 wherein
R^{7a} independently represents a C₁₋₃₀ alkyl group that may have one or more substituents or a hydrogen atom ,
R^{8a} independently represents a C₁₋₃₀ alkyl group that may have one or more substituents or a hydrogen atom ,
R^{9a} independently represents a C₁₋₃₀ alkyl group that may have one or more substituents or a hydrogen atom ,
R^{10a} independently represents a C₁₋₃₀ alkyl group that may have one or more substituents or a hydrogen atom ,
R^{11a} independently represents a C₁₋₃₀ alkyl group that may have one or more substituents or a hydrogen atom ,
R^{12a} independently represents a C₁₋₃₀ alkyl group that may have one or more substituents or a hydrogen atom , and
n3 and n4 have the same meanings as above,
provided that the occurrence order of a unit in parentheses with n3 or n4 is arbitrary in the formula (3-A).

In the formula (3-A), R^{7a} independently represents a C₁₋₃₀ alkyl group that may have one or more substituents or a hydrogen atom , R^{8a} independently represents a C₁₋₃₀ alkyl group that may have one or more substituents or a hydrogen atom , R^{9a} independently represents a C₁₋₃₀ alkyl group that may have one or more substituents or a hydrogen atom , R^{10a} independently represents a C₁₋₃₀ alkyl group that may have one or more substituents or a hydrogen atom , R^{11a} independently represents a C₁₋₃₀ alkyl group that may have one or more substituents or a hydrogen atom , and R^{12a} independently represents a C₁₋₃₀ alkyl group that may have one or more substituents or a hydrogen atom .

The alkyl group represented by R^{7a}, R^{8a}, R^{9a}, R^{10a}, R^{11a}, or R^{12a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{7a}, R^{8a}, R^{9a}, R^{10a}, R^{11a}, or R^{12a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

In one aspect, R^{7a}, R^{8a}, R^{9a}, R^{10a}, R^{11a}, and R^{12a} are preferably hydrogen atoms.

The above cyclic compound is preferably a compound represented by one or more selected from the group consisting of the formulae (1), (2), and (3), and may more preferably be a compound represented by one or more selected from the group consisting of the formulae (1-A), (2-A), and (3-A).

The pyrolysis temperature of the cyclic compound itself (cyclic compound alone) can be preferably 250°C or higher, more preferably 260°C or higher, and still more preferably 270°C or higher. If the cyclic compound itself has high heat resistance, at the time of producing the composite by a melting method, the cyclic compound does not pyrolyze even when the melting point of the polymer is 250°C or higher and can be melted and mixed with the polymer. In addition, even in a case where a polymer has a low melting point, since it is common that an increase in temperature decreases the melt viscosity of the polymer itself, the contact opportunity between the cyclic compound and a polymer end increases, whereby it is expected that the polymer can be included in the cyclic compound within a short period of time.

When two or more cyclic compounds are contained in the above composite, these two or more cyclic compounds may be the same or different from one another.

The proportion of the above cyclic compound may preferably be 0.01 mass% or more and 99 mass% or less, more preferably 0.1 mass% or more and 95 mass% or less, and sill more preferably 1 mass% or more and 90 mass% or less in a total of 100 parts by mass of the polymer and the cyclic compound described below. When the proportion of the cyclic compound falls within the range, the heat resistance, particularly, pyrolysis resistance of the composite is favorable.

The polymer has at least one of the glass transition temperature and the melting point at 130°C or higher. In other words, it is preferable that the glass transition temperature of the polymer is 130°C or higher or the melting point of the polymer is 130°C or higher. In detail, in a case where the polymer is a crystalline polymer, the polymer has both a glass transition temperature and a melting point, and at least one of the glass transition temperature and the melting point thus needs to be 130°C or higher, and in a case where the polymer is an amorphous polymer, the polymer has only a glass transition temperature, and the glass transition temperature thus needs to be 130°C or higher. When the polymer has at least one of the glass transition temperature and the melting point at 130°C or higher, the composite to be obtained has favorable heat resistance, particularly, pyrolysis resistance. The polymer preferably has at least one of the glass transition temperature and the melting point at 150°C or higher, may have at least one of the glass transition temperature and the melting point at 300°C or lower, and furthermore, may have at least one of the glass transition temperature and the melting point at 250°C or lower.

The above polymer may preferably be a linear polymer. When the above polymer is linear, the polymer easily penetrates through the inside of the ring of the cyclic compound, which may result in easy formation of a composite.

In the present disclosure, for example, the above polymer may have one or more substituents. Examples of the substituent that may be contained in the above polymer include one or more selected from the group consisting of -COOR^{f13}, - OR^{f13}, -NR^{f13}₂, -NR^{f13}-CO-R^{f13}, -CO-NR^{f13}₂, -NO₂, -CN, -COR¹⁴, -SO₂R^{f14} , -O-COR^{f14}, a C₁₋₅ alkyl group optionally substituted with one or more halogen atoms, and a halogen atom.

In the substituent that may be contained in the above polymer, the sum of C, N, O, and S is 1 or more, and may preferably be 5 or less, more preferably 3 or less, and sill more preferably 2 or less.

R^{f13} independently represents a C₁₋₄ alkyl group optionally substituted with one or more halogen atoms or a hydrogen atom .

The "C₁₋₄ alkyl group" in the C₁₋₄ alkyl group optionally substituted with one or more halogen atoms represented by R^{f13} may be linear or branched, and is preferably a linear or branched C₁₋₃ alkyl group, and more preferably a linear C₁₋₃ alkyl group.

Examples of the halogen atom that may substitute the above C₁₋₄ alkyl group represented by R^{f13} include a fluorine atom, a chlorine atom, a bromine atom, and an iodine atom, and a fluorine atom or a chlorine atom is preferable.

In one aspect, the above C₁₋₄ alkyl group optionally substituted with one or more halogen atoms represented by R^{f13} is preferably a C₁₋₄ alkyl group substituted with one or more halogen atoms, sill more preferably a C₁₋₄ alkyl group substituted with one or more fluorine atoms, and even more preferably a C₁₋₄ perfluoroalkyl group.

For example, the above C₁₋₄ perfluoroalkyl group in R^{f13} may be linear or branched, and is preferably a linear or branched C₁₋₃ perfluoroalkyl group, more preferably a linear C₁₋₃ perfluoroalkyl group, and specifically, CF₃-, CF₃CF₂-, or CF₃CF₂CF₂-.

R^{f14} independently represents a C₁₋₄ alkyl group optionally substituted with one or more fluorine atoms, a hydrogen atom, or a halogen atom .

The "C₁₋₄ alkyl group" in the C₁₋₄ alkyl group optionally substituted with one or more halogen atoms represented by R^{f14} may be linear or branched, and is preferably a linear or branched C₁₋₃ alkyl group, and more preferably a linear C₁₋₃ alkyl group.

Examples of the above halogen atom that may substitute the C₁₋₄ alkyl group represented by R^{f14} include a fluorine atom, a chlorine atom, a bromine atom, and an iodine atom, and a fluorine atom or a chlorine atom is preferable.

In one aspect, the above C₁₋₄ alkyl group optionally substituted with one or more halogen atoms represented by R^{f14} is preferably a C₁₋₄ alkyl group substituted with one or more halogen atoms, sill more preferably a C₁₋₄ alkyl group substituted with one or more fluorine atoms, and even more preferably a C₁₋₄ perfluoroalkyl group.

For example, the above C₁₋₄ perfluoroalkyl group in R^{f14} may be linear or branched, and is preferably a linear or branched C₁₋₃ perfluoroalkyl group, more preferably a linear C₁₋₃ perfluoroalkyl group, and specifically, -CF₃, -CF₂CF₃, or - CF_{2C}F₂CF₃.

The "C₁₋₅ alkyl group" in the above C₁₋₅ alkyl group optionally substituted with one or more halogen atoms as the substituent may be linear or branched, and is preferably a linear or branched C₁₋₃ alkyl group, and more preferably a linear C₁₋₃ alkyl group.

Examples of the halogen atom that may substitute the above C₁₋₃ alkyl group as the substituent include a fluorine atom, a chlorine atom, a bromine atom, and an iodine atom, and a fluorine atom or a chlorine atom is preferable. In one aspect, the above C₁₋₅ alkyl group optionally substituted with one or more halogen atoms is preferably a C₁₋₅ alkyl group substituted with one or more halogen atoms, sill more preferably a C₁₋₅ alkyl group substituted with one or more fluorine atoms, and even more preferably C₁₋₄ perfluoroalkyl group.

For example, the above C₁₋₄ perfluoroalkyl group may be linear or branched, and is preferably a linear or branched C₁₋₃ perfluoroalkyl group, more preferably a linear C₁₋₃ perfluoroalkyl group, and specifically, CF₃-, CF₃CF₂-, or CF₃CF₂CF₂-.

Examples of the above halogen atom as the substituent include a fluorine atom, a chlorine atom, an iodine atom, and a bromine atom, and a fluorine atom or a chlorine atom is preferable.

The polymer preferably comprises one or more selected from a linear polymer having one selected from the group consisting of a hydroxyl group, a carbonyl group, an ester group, an amide group, an imide group, and an ether group in the repeating structural unit; a linear polymer having an aromatic ring in the repeating structural unit; and a fluorine-containing polymer.

Examples of the linear polymer having one selected from the group consisting of a hydroxyl group, a carbonyl group, an ester group, an amide group, an imide group, and an ether group include polyvinyl alcohol, ethylene-vinyl alcohol copolymers, polyacetal, polyamide, polycarbonate, polyphenylene ether, polyester, polyarylate, polysulfone, polyether ketone, polyether ether ketone, and the like, and polyester is particularly preferable.

Examples of the linear polymer having one selected from the group consisting of a hydroxyl group, a carbonyl group, an ester group, an amide group, an imide group, and an ether group in the repeating structural unit include polymers having one or more repeating structural units selected from the following formulae (B1) to (B8):

-[O-R^{b1}]- (B1)

-[O-CO-O-R^{b2}]- (B2)

-[O-CO-R^{b2}-CO-O-R^{b2}]- (B3)

-[NH-CO-R^{b2}-CO-NH-R^{b2}]- (B4)

-[O-R^{b2}-SO₂-R^{b2}-O-R^{b2}]- (B5)

-[O-R^{b2}-CO-R^{b2}]- (B6)

-[O-R^{b2}-O-R^{b2}-CO-R^{b2}]- (B7)

-[-CH₂-CH(OH)]- (B8)

wherein
R^{b1} represents a divalent group comprising a C₆₋₂₀ aromatic hydrocarbon group optionally having one or more substituents or -CH₂-; and
R^{b2} independently represents a divalent group comprising a C₆₋₂₀ aromatic hydrocarbon group optionally having one or more substituents or a C₁₋₁₆ alkylene group optionally having one or more substituents .

The polymer may have a repeating structural unit other than the repeating structural units represented by the formulae (B1) to (B8). As such a repeating structural unit, the following formula (B9):

-[CR^{b3}₂-CR^{b3}₂]- (B9)

wherein
R^{b3} represents a C₁₋₁₆ alkyl group optionally having one or more substituents or a hydrogen atom.

In a case where the polymer comprises two or more repeating structural units, the polymer may be any of a block copolymer and a random copolymer.

When the polymer is a polymer having the above-described repeating structural unit, the composite to be obtained has favorable heat resistance, particularly, pyrolysis resistance.

R^{b1} represents a divalent group comprising a C₆₋₂₀ aromatic hydrocarbon group optionally having one or more substituents or -CH₂-, R^{b2} represents a divalent group comprising a C₆₋₂₀ aromatic hydrocarbon group optionally having one or more substituents or a C₁₋₁₆ alkylene group optionally having one or more substituents. R^{b3} represents a C₁₋₁₆ alkyl group optionally having one or more substituents or a hydrogen atom.

For example, the "C₆₋₂₀ aromatic hydrocarbon group" in the divalent group comprising a C₆₋₂₀ aromatic hydrocarbon group optionally having one or more substituents represented by R^{b1} or R^{b2} may be monocyclic or polycyclic, and in the case of polycyclic, two or more rings may form a condensed ring or may not form a condensed ring. In the divalent group comprising a C₆₋₂₀ aromatic hydrocarbon group optionally having one or more substituents, the number of aromatic hydrocarbon groups is 1 or more, and may preferably be 1 or more and 4 or less, more preferably 1 or more and 3 or less, and sill more preferably 1 or 2. Such an aromatic hydrocarbon group may preferably be a C₆₋₁₀ aromatic hydrocarbon group, sill more preferably a phenylene group, a tolylene group, a xylylene group, or a naphthylene group, and even more preferably a phenylene group, a tolylene group, or a xylylene group.

In such a divalent group comprising a C₆₋₂₀ aromatic hydrocarbon group optionally having one or more substituents, for example, two or more aromatic hydrocarbon groups may be bound via a single bond or a divalent organic group. Examples of such an organic group include a linear or branched C₁₋₄ alkyl group.

The divalent group comprising a C₆₋₂₀ aromatic hydrocarbon group optionally having one or more substituents represented by R^{b1} or R^{b2} is preferably represented by the following formula:

*-Ar¹-(X¹-Ar¹)ₙ₁₀-*

wherein
Ar¹ independently represents a divalent C₆₋₁₀ aromatic hydrocarbon group optionally having one or more substituents ,
X¹ represents a single bond, -O-, -CO-, -SO₂-, or a C₁₋₄ alkylene group,
n10 represents an integer of 0 or more and 3 or less,
* represents a bond, and
the total number of carbon atoms in the formula is 6 or more and 20 or less.

Ar¹ represents a divalent C₆₋₁₀ aromatic hydrocarbon group optionally having one or more substituents.

For example, the "divalent C₆₋₂₀ aromatic hydrocarbon group" in the above divalent C₆₋₂₀ aromatic hydrocarbon group optionally having one or more substituents may be monocyclic or polycyclic, and in the case of polycyclic, two or more rings may form a condensed ring or may not form a condensed ring. The "divalent C₆₋₂₀ aromatic hydrocarbon group" in the divalent C₆₋₂₀ aromatic hydrocarbon group optionally having one or more substituents is preferably a divalent C₆₋₁₅ aromatic hydrocarbon group, more preferably a divalent C₆₋₁₀ aromatic hydrocarbon group, sill more preferably a phenylene group, a tolylene group, a xylylene group, or a naphthylene group, and even more preferably a phenylene group, a tolylene group, or a xylylene group.

Examples of the substituent that may be contained in the divalent C₆₋₁₀ aromatic hydrocarbon group represented by Ar¹ include one or more selected from the group consisting of -COOR^{f13}, -OR^{f13}, -NR^{f13}₂, -NR^{f13}-CO-R^{f13}, -CO-NR^{f13}₂, - NO₂, -CN, -COR¹⁴, -SO₃R^{f14}, -O-COR^{f14}, and a halogen atom. R^{f13} and R^{f14} have the same meanings as above.

The substituent that may be contained in the above divalent C₆₋₁₀ aromatic hydrocarbon group may preferably be one or more selected from the group consisting of -COOH, -OH, -NH₂, -CONR^{f13}, -NO₂, -CN, -COH, -COCl, -SO₃H, -O-COR^{f14}, and a halogen atom, more preferably a halogen atom, and still more preferably a fluorine atom or a chlorine atom.

X¹ represents a single bond, -O-, -CO-, -SO₂-, or a C₁₋₄ alkylene group. For example, such a C₁₋₄ alkylene group may be linear or branched, preferably a linear or branched C₁₋₃ alkylene group, and specifically -CH₂- or -C(CH₃)₂-.

The substituent that may be contained in the divalent group comprising a C₆₋₂₀ aromatic hydrocarbon group represented by R^{b1} or R^{b2} include one or more selected from the group consisting of -COOR^{f13}, -OR^{f13}, -NR^{f13}₂, -NR^{f13}-CO-R^{f13}, -CO-NR^{f13}₂, -NO₂, -CN, -COR¹⁴, -SO₃R^{f14}, -O-COR^{f14}, and a halogen atom. R^{f13} and R¹⁴ have the same meanings as above.

The substituent that may be contained in the divalent group comprising the above divalent C₆₋₁₀ aromatic hydrocarbon group may preferably be one or more selected from the group consisting of -COOH, -OH, -NH₂, -CONR^{f13}, -NO₂, -CN, - COH, -COCl, -SO₃H, -O-COR^{f14}, and a halogen atom, more preferably a halogen atom, and sill more preferably a fluorine atom or a chlorine atom.

The divalent group comprising a C₆₋₂₀ aromatic hydrocarbon group optionally having one or more substituents represented by R^{b1} or R^{b2} is preferably phenylene group, tolylene group, xylylene group, hydroxyphenylene group, hydroxyxylylene group, naphthylene group, biphenylene group, 3,3'-dimethylbiphenylene group, 3,3',5,5'-tetramethylbiphenylene group, 2,2-diphenylpropane-4,4'-diyl group, 1,1-diphenylmethane-4,4'-diyl group, abenzophenone-4,4'-diyl group, diphenylsulfone-4,4'-diyl group, or oxybisphenyl-4,4'-diyl group, more preferably phenylene group, a xylylene group, hydroxyphenylene group, hydroxyxylylene group, naphthylene group, 2,2-diphenylpropane-4,4'-diyl group, 1,1-diphenylmethane-4,4'-diyl group, benzophenone-4,4'-diyl group, diphenylsulfone-4,4'-diyl group, or oxybisphenyl-4,4'-diyl group.

For example, the "C₁₋₁₆ alkylene group" in the C₁₋₁₆ alkylene group optionally having one or more substituents represented by R^{b2} may be linear or branched, preferably a linear or branched C₁₋₁₀ alkylene group, more preferably a linear or branched C₁₋₆ alkylene group, and specifically, -CH₂-, -CH₂CH₂-, -CH₂CH₂CH₂-, - CH(CH₃)CH₂-, -C(CH₃)₂-, -CH₂CH₂CH₂CH₂-, -CH(CH₃)CH₂CH₂-, - CH₂CH(CH₃)CH₂-, -C(CH₃)₂CH₂-, -CH₂CH₂CH₂CH₂CH₂-, -CH(CH₃)CH₂CH₂CH₂-, -CH₂CH(CH₃)CH₂CH₂-, -C(CH₃)₂CH₂CH₂-, -CH₂C(CH₃)₂CH₂-, - CH₂CH₂CH₂CH₂CH₂CH₂-, CH(CH₃)CH₂CH₂CH₂CH₂-, - CH₂CH(CH₃)CH₂CH₂CH₂-, -CH₂CH₂CH(CH₃)CH₂CH₂-, -C(CH₃)₂CH₂CH₂CH₂-, or -CH₂C(CH₃)₂CH₂CH₂-.

Examples of the substituent that may be contained in the C₁₋₁₆ alkylene group represented by R^{b2} include one or more selected from the group consisting of - COOR^{f13}, -OR^{f13}, -NR^{f13}₂, -NR^{f13}-CO-R^{f13}, -CO-NR^{f13}₂, -NO₂, -CN, -COR¹⁴, - SO₃R^{f14}, -O-COR^{f14}, and a halogen atom. R^{f13} and R^{f14} have the same meanings as above.

The substituent that may be contained in the above C₁₋₁₆ alkylene group represented by R^{b2} may preferably be one or more selected from the group consisting of -COOH, -OH, -NH₂, -CONR^{f13}, -NO₂, -CN, -COH, -COCl, -SO₃H, -O-COR^{f14}, and a halogen atom, more preferably a halogen atom, and sill more preferably a fluorine atom or a chlorine atom.

"C₁₋₁₆ alkyl group" in the C₁₋₁₆ alkyl optionally having one or more substituents that is represented by R^{b3} may be linear or branched, but is preferably a linear or branched C₁₋₁₀ alkyl group and more preferably a linear or branched C1-6 alkyl group, and can be specifically -CH₃, -CH₂CH₃, -CH₂CH₂CH₃, -CH(CH₃)CH₃, - CH(CH₃)₂, -CH₂CH₂CH₂CH₃, -CH(CH₃)CH₂CH₃, -CH₂CH(CH₃)CH₃, -C(CH₃)₂CH₃, -CH₂CH₂CH₂CH₂CH₃, -CH(CH₃)CH₂CH₂CH₃, -CH₂CH(CH₃)CH₂CH₃, - C(CH₃)₂CH₂CH₃, -CH₂C(CH₃)₂CH₃, -CH₂CH₂CH₂CH₂CH₂CH₃, CH(CH₃)CH₂CH₂CH₂CH₃, -CH₂CH(CH₃)CH₂CH₂CH₃, -CH₂CH₂CH(CH₃)CH₂CH₃, -C(CH₃)₂CH₂CH₂CH₃, or -CH₂C(CH₃)₂CH₂CH₃.

Examples of the substituent that the C₁₋₁₆ alkyl group represented by R^{b3} may have include one or more selected from -COOR^{f13}, -OR^{f13}, -NR^{f13}₂, -NR^{f13}-CO-R^{f13}, - CO-NR^{f13}₂, -NO₂, -CN, -COR¹⁴, -SO₃R^{f14}, -O-COR^{f14}, and a halogen atom. R^{f13} and R^{f14} have the same meanings as above.

The substituent that the C₁₋₁₆ alkyl group represented by R^{b3} may have can be preferably one or more selected from -COOH, -OH, -NH₂, -CONR^{f13}, -NO₂, -CN, - COH, -COCl, -SO₃H, -O-COR^{f14}, and a halogen atom, more preferably a halogen atom, and still more preferably a fluorine atom or a chlorine atom.

The number average molecular weight of the linear polymer having one selected from the group consisting of a hydroxyl group, a carbonyl group, an ester group, an amide group, an imide group, and an ether group in the repeating structural unit can be, for example, 500 to 1,000,000, preferably 1,000 to 500,000, more preferably 1,500 to 300,000, still more preferably 2,000 to 300,000, and for example, 3,000 to 300,000.

In the present disclosure, the number average molecular weight can be measured by gel permeation chromatography in terms of polystyrene as the standard sample.

Examples of the linear polymer having an aromatic ring in the repeating structural unit include polymers having a repeating structural unit in which one or more of R^{b1} and R^{b2} have an aromatic ring in the formulae (B1) to (B7).

The number average molecular weight of the linear polymer having an aromatic ring in the repeating structural unit can be, for example, 500 to 1,000,000, preferably 1,000 to 500,000, more preferably 1,500 to 300,000, still more preferably 2,000 to 300,000, and for example, 3,000 to 250,000.

Examples of the fluorine-containing polymer include fluorine-containing olefin-based polymers and fluorine-containing acrylic polymers. The polymer may preferably comprise one or more selected from fluorine-containing olefin-based polymers.

The fluorine-containing olefin-based polymer may be a polymer of a fluorine-containing olefin compound, and has one or more repeating units formed from the fluorine-containing olefin compound.

The above fluorine-containing olefin compound is preferably represented by the following formula:

CR^{f20}R^{f21}=CR^{f22}R^{f23}

wherein
R^{f20} represents one selected from the group consisting of a hydrogen atom, a fluorine atom, a chlorine atom, a C₁₋₅ fluoroalkyl group, and a C₁₋₅ perfluoroalkoxy group,
R^{f21} represents one selected from the group consisting of a hydrogen atom, a fluorine atom, a chlorine atom, a C₁₋₅ fluoroalkyl group, and a C₁₋₅ perfluoroalkoxy group,
R^{f22} represents one selected from the group consisting of a hydrogen atom, a fluorine atom, a chlorine atom, a C₁₋₅ fluoroalkyl group, and a C₁₋₅ perfluoroalkoxy group,
R^{f23} represents one selected from the group consisting of a hydrogen atom, a fluorine atom, a chlorine atom, a C₁₋₅ fluoroalkyl group, and a C₁₋₅ perfluoroalkoxy group, and
one or more of R^{f20} to R^{f23} are fluorine atoms.

In the above formula, R^{f20} represents one selected from the group consisting of a hydrogen atom, a fluorine atom, a chlorine atom, a C₁₋₅ fluoroalkyl group, and a C₁₋₅ perfluoroalkoxy group, R^{f21} represents one selected from the group consisting of a hydrogen atom, a fluorine atom, a chlorine atom, a C₁₋₅ fluoroalkyl group, and a C₁₋₅ perfluoroalkoxy group, R^{f22} represents one selected from the group consisting of a hydrogen atom, a fluorine atom, a chlorine atom, a C₁₋₅ fluoroalkyl group, and a C₁₋₅ perfluoroalkoxy group, and R^{f23} represents one selected from the group consisting of a hydrogen atom, a fluorine atom, a chlorine atom, a C₁₋₃ fluoroalkyl group, and a C₁₋₅ perfluoroalkoxy group.

For example, the C₁₋₅ fluoroalkyl group represented by R^{f20}, R^{f21}, R^{f22}, or R^{f23} may be linear or branched, preferably a linear or branched C₁₋₅ fluoroalkyl group, in particular, a C₁₋₃ fluoroalkyl group, and more preferably a linear C₁₋₃ fluoroalkyl group. In one aspect, the C₁₋₅ fluoroalkyl group represented by R^{f20}, R^{f21}, R^{f22}, or R^{f23} is preferably a C₁₋₅ perfluoroalkyl group. For example, the above C₁₋₅ perfluoroalkyl group may be linear or branched, preferably a linear or branched C₁₋₅ perfluoroalkyl group, in particular, a C₁₋₃ perfluoroalkyl group, and more preferably a linear C₁₋₃ perfluoroalkyl group. Specific examples of the C₁₋₅ fluoroalkyl group represented by R^{f20}, R^{f21}, R^{f22}, or R^{f23} include -CF₃, -CF₂CF₃, or -CF₂CF₂CF₃.

For example, the C₁₋₅ perfluoroalkoxy group represented by R^{f20}, R^{f21}, R^{f22}, or R^{f23} may be linear or branched, and is preferably a linear or branched C₁₋₅ perfluoroalkoxy group, in particular, C₁₋₃ perfluoroalkoxy group, more preferably a linear perfluoroalkoxy group, and specifically, -O-CF₃, -O-CF₂CF₃, or -O-CF₂CF₂CF₃.

In one aspect, R^{f20} may preferably be a fluorine atom or a hydrogen atom, R^{f21} may preferably be a fluorine atom or a hydrogen atom, R^{f22} may preferably be a fluorine atom or a hydrogen atom, and R^{f23} may preferably be a fluorine atom or a hydrogen atom. In another aspect, R^{f20} may preferably be a fluorine atom or a hydrogen atom, R^{f21} may preferably be a fluorine atom or a hydrogen atom, R^{f22} may preferably be a fluorine atom or a hydrogen atom, and R^{f23} may preferably be a C₁₋₅ perfluoroalkyl group or a C₁₋₅ perfluoroalkoxy group.

The above fluorine-containing olefin compound preferably comprises one or more selected from the group consisting of tetrafluoroethylene, trifluoroethylene, vinylidene fluoride, chlorotrifluoroethylene, 1,2-difluoroethylene, hexafluoropropylene, 2,3,3,3-tetrafluoropropene, vinyl fluoride, perfluoromethyl vinyl ether, perfluoroethyl vinyl ether, and perfluoropropyl vinyl ether.

In one aspect, the above fluorine-containing olefin compound may preferably be vinylidene fluoride.

Examples of the above fluorine-containing olefin-based polymer include one or more selected from the group consisting of a chlorotrifluoroethylene/tetrafluoroethylene/perfluoro(alkyl vinyl ether) copolymer, an ethylene/tetrafluoroethylene copolymer, an ethylene/chlorotrifluoroethylene copolymer, polyvinylidene fluoride, a vinylidene fluoride/tetrafluoroethylene copolymer, a vinylidene fluoride/tetrafluoroethylene/chlorotrifluoroethylene copolymer, polychlorotrifluoroethylene, a vinylidene fluoride/hexafluoropropylene copolymer, a vinylidene fluoride/tetrafluoroethylene/hexafluoropropylene copolymer, and poly 1,2-difluoroethylene. In one aspect, the above fluorine-containing olefin-based polymer comprises polyvinylidene fluoride.

The number average molecular weight of the above fluorine-containing olefin-based polymer may preferably be 1,000 or more and 1,000,000 or less, more preferably 2,000 or more and 500,000 or less, and sill more preferably 3,000 or more and 300,000 or less.

In the present disclosure, the number average molecular weight of the fluorine-containing olefin-based polymer can be measured by gel permeation chromatography in terms of polystyrene as the standard sample.

For example, the above polymer may have a blocked moiety at an end or may not have a blocked moiety. The blocked moiety may be a C₆₋₃₀ aromatic hydrocarbon group optionally having one or more substituents or a C₆₋₃₀ cycloaliphatic hydrocarbon group optionally having one or more substituents. Examples of the above blocked moiety include a dinitrophenyl group; cyclodextrin; an adamantyl group; a trityl group; fluorescein; pyrene; an alkyl group, an alkoxy group, a hydroxy group, a halogen atom, a phenyl group having one or more selected from the group consisting of a cyano group, a sulfonyl group, a carboxy group, an amino group, and a phenyl group as a substituent; and steroid, one or more selected from the group consisting of a dinitrophenyl group, cyclodextrin, an adamantyl group, a trityl group, fluorescein, and pyrene are preferable, and one or more selected from the group consisting of an adamantyl group and a trityl group are more preferable. The number of blocked moieties contained in the above polymer may be one or more and two or less.

The number average molecular weight of the above polymer may be, for example, 500 to 1,000,000, preferably 1,000 to 700,000, more preferably 2,000 to 500,000, still more preferably 2,000 to 300,000, and for example, 3,000 to 300,000.

In one aspect, it is preferable that the cyclic compound comprises the compound represented by the formula (1) and the polymer comprises a fluorine-containing olefin-based polymer or polyester.

The pyrolysis temperature of the above composite is preferably 170°C or higher, more preferably 200°C or higher, and may be, for example, 400°C or lower. The composite of the present disclosure has favorable heat resistance, particularly, pyrolysis resistance and can suitably be used in applications required for high heat resistance.

In the present disclosure, the pyrolysis temperature is defined as the temperature at the time when, in thermogravimetric measurement of about 10 mg of a sample under a nitrogen atmosphere at a nitrogen flow rate of 200 mL/min, the mass of a measurement object is decreased by 5 mass% as compared with the mass of the measurement object before initiation of the measurement.

Where tₓ indicates the pyrolysis temperature of the above composite and t_{y} indicates a lower one of the pyrolysis temperature of the cyclic compound before formation of the above composite and the pyrolysis temperature of the fluorine-containing polymer before formation of the above composite, tₓ - t_{y} is preferably 50°C or more, may be 50°C or more and 300°C or less, and further, 55°C or more and 250°C or less.

In the composite of the present disclosure, the pyrolysis temperature significantly improves by the combination of an extremely small amount of the cyclic compound with the polymer while the reason therefor is not clear. For example, when the amount of the cyclic compound is 10 parts by mass or less per 100 parts by mass of the polymer, the difference in the pyrolysis temperature of the composite to be obtained and the pyrolysis temperature of the polymer may preferably be 30°C or more, and more preferably 50°C or more.

### <Method for producing composite>

The above composite may be produced by a production method including contacting the polymer and the above cyclic compound represented by the formula (I) in an absence of a solvent to obtain the composite.

According to the production method of the present disclosure, the polymer and the cyclic compound are contacted in an absence of a solvent, and thus, inclusion of the polymer by the cyclic compound easily progresses regardless of the degree of progress of the formation of a composite. When contacting is performed in a solvent, inclusion of the polymer by the cyclic compound may change the solubility in the solvent and the formation of a composite may not progress. Since no solvent is used in the production method of the present disclosure, a desired composite is easily obtained without being influenced by the change in solubility accompanied by the progress of the formation of a composite.

The contacting method is not limited, and examples thereof include methods using a ball mill, a planetary centrifugal mixer, a homogenizer, ultrasonic dispersion, or the like.

The contacting is preferably performed at a temperature higher than at least one of the glass transition temperature and the melting point of the polymer. This makes it easy for the polymer to be freely deformed, so that the composite can be more efficiently produced.

The contacting is preferably performed at a temperature preferably 5°C or more, and more preferably 10°C or more higher than at least one of the glass transition temperature and the melting point of the polymer. The difference between the temperature at which the contacting is performed and at least one of the glass transition temperature and the melting point of the polymer may be, for example, 50°C or less, and further 30°C or less.

In the production method of the present disclosure, the polymer and the cyclic compound are contacted with each other in an absence of a solvent, but the production method is not limited thereto, and contacting may be performed in the presence of a solvent. Examples of such a solvent include water, ethanol, dimethylformamide, toluene, methanol, chlorobenzene, diethylformamide, dimethyl sulfoxide, water, hydrogen peroxide, methylamine, a sodium hydroxide solution, N-methylpyrrolidone ether, acetonitrile, benzyl chloride, triethylamine, or ethylene glycol, or a mixture thereof.

The composite of the present disclosure can be produced by the above-described production method but is not limited to composites produced by the above-described production method. In addition, the above-described production method is capable of producing the composite of the present disclosure but is not limited only to an aspect of producing the composite of the present disclosure.

### <Composition>

A composition comprising the above composite is also included in the technical scope of the present disclosure.

For example, such a composition may further comprise one or more selected from the group consisting of a resin, a solvent, and a further additive in addition to the above composite.

In such a composition, the content of the above composite may preferably be 0.1 mass% or more and less than 100 mass%, and more preferably 1 mass% or more and 99 mass% or less per 100 mass% of the solid content of the composition.

Examples of the resin include acrylic resins, polyurethane resins, polyolefin resins, polyester resins, polyamide resins, vinyl chloride resins, styrene resins, vinyl ether resins, polyvinyl alcohol resins, polycarbonate resins, polysulfone resins, and the like.

Examples of the above solvent include water, ethanol, dimethylformamide, toluene, methanol, chlorobenzene, diethylformamide, dimethyl sulfoxide, water, hydrogen peroxide, methylamine, a sodium hydroxide solution, N-methylpyrrolidone ether, acetonitrile, benzyl chloride, triethylamine, or ethylene glycol, or a mixture thereof.

Examples of the above additive include an emulsifier, an antifoaming agent, a surfactant, a leveling agent, a thickening agent, a viscoelasticity adjusting agent, an antifoaming agent, a wetting agent, a dispersant, an antiseptic agent, a plasticizer, a penetrating agent, a fragrance, a fungicide, a miticide, an antifungal agent, an ultraviolet absorber, an antioxidant, an antistatic agent, a flame retarder, a dye, and a pigment.

For example, the above composition may be in a powder form or in a liquid form. In one aspect, the above composition is in a powder form, and in another aspect, the above composition is in a liquid form.

### Examples

Hereinafter, the present disclosure will be more specifically described with reference to Examples below, but the present disclosure is not limited thereto.

The structures of cyclic compounds used in Examples are shown.

| | |
|---|---|
| **C2P5A** | 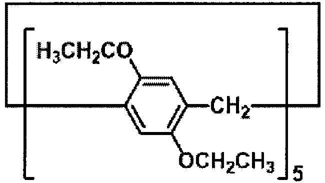 |
| **P5OH** | 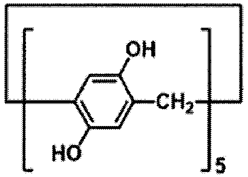 |
| **C5P5A** | 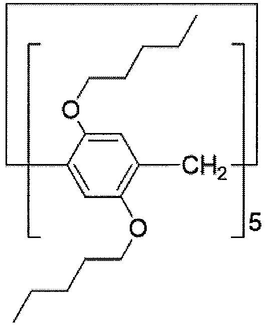 |

The polymers used in Examples and Comparative Examples are shown.

PBR: Commercially available polybutadiene having a weight average molecular weight of 5,000, cis-and trans-1,4 of 80%, and a vinyl group of 20% was used. A typical structural formula is shown below. 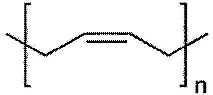
PVDF1: PVDF VP-832 manufactured by Daikin Industries, Ltd., melting point 178°C, MFR 230°C, 10 kgf: 3.15 g/10 min, molecular weight Mw 200,000 (GPC)
PVDF2: PVDF Kyner HSV900 manufactured by Arkema, melting point 162°C, MFR 230°C, 10 kgf: 0.2 g/10 min
PLA: Commercially available polylactic acid having a weight average molecular weight of 10,000 to 18,000, a melting point of 140°C, and a glass transition temperature of 51°C was used. The structural formula is shown below.

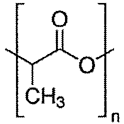

High-melting-point PLA (PLLA): A commercially available one having a ratio of an optical isomer L-form of 99% or more and a melting point of 180°C was used. The structural formula is shown below.

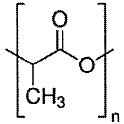

Measurement methods used in Examples are shown.

### (1) NMR

NMR is measured using an NMR measurement apparatus (JNM-ECZ500R or JEOL JNM-ECS400) manufactured by JEOL Ltd.
¹H-NMR measurement conditions: 500 MHz or 400 MHz (tetramethylsilane = 0 ppm)

### (2) IR analysis

IR analysis is performed using a Fourier transform infrared spectrophotometer (IRPrestige-21) manufactured by SHIMADZU CORPORATION at room temperature.

### (3) Pyrolysis temperature

The pyrolysis temperature was measured from approximately 10 mg of a sample using a TG/DTA analyzer (thermogravimetry/differential thermal analyzer) (STA7200) manufactured by Hitachi High-Tech Corporation at a nitrogen flow rate set to 200 mL/min in a nitrogen gas atmosphere under measurement conditions of a temperature range of 23°C to 600°C and a temperature-increasing rate of 10 °C/min. The pyrolysis temperature was defined as the temperature at the time when the mass of a measurement object was decreased by 5% as compared with the mass of the measurement object before initiation of the measurement.

### (4) DSC

Using a DSC (differential scanning calorimeter: Hitachi High-Tech Corporation., DSC7020), the temperature was increased (first run), reduced, and increased (second run) under the conditions of 10°C/min in a temperature range of 30°C to 200°C.

### (5) X-ray diffraction

X-ray diffraction was measured using an Automated Multipurpose X-ray Diffractometer (SmartLab: manufactured by Rigaku Holdings Corporation) under the following conditions.

Measurement angle: 10 to 30° (light source: Cu/Kα, wavelength: 1.5418 Å)

### Example 1 (Melt formation of composite of PLA and P5OH)

In a 5 mL glass tube, 0.36 g (5 mmol) of PLA was put, and the temperature thereof was then increased to 150°C to melt PLA completely. To the tube, 0.061 g (0.1 mmol) of P5OH was added as the cyclic compound, the mixture was allowed to stand still at 150°C for 15 hours, 24 hours, or 65 hours and then allowed to cool to room temperature to obtain a solid composite. The obtained composite was washed with 90 mL of chloroform serving as a good solvent of PLA, and as a result, an undissolved composite was observed. This is considered due to the change of the solubility by inclusion of P5OH in PLA. Since not-included PLA is flowed out in the washing treatment by the good solvent, only the included composite was successfully purified.

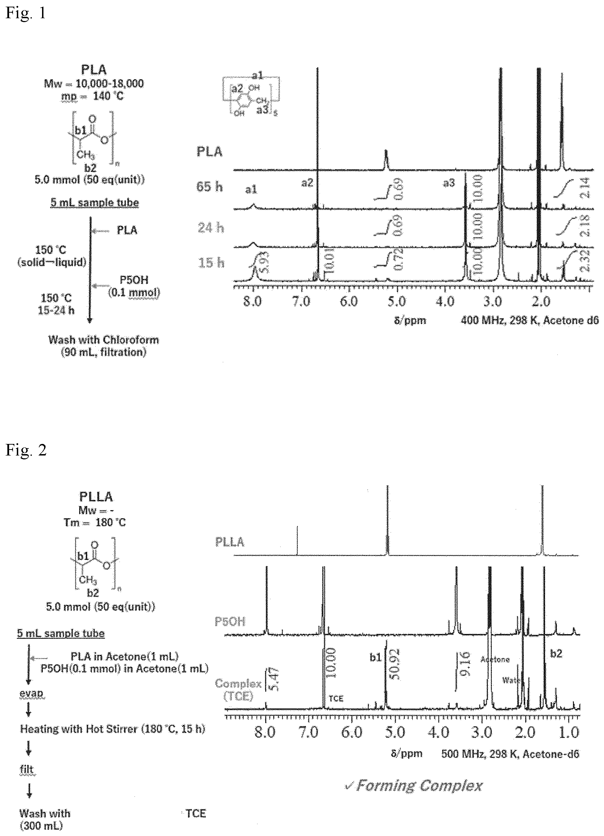

The composite after purification was dissolved in acetone d6 to measure ¹H-NMR, and as a result, peaks based on PLA and P5OH were observed in each sample. FIG. 1 shows the results. For comparison, FIG. 1 also shows the results of PLA only and the positions of the chemical shifts of the hydrogen atoms of P5OH.

The above results demonstrated that the included composite was successfully obtained in the treatment under the conditions of 150°C for at least 15 hours.

Although the amount washed with chloroform was doubled to 180 mL, a solid was obtained as above, and peaks based on PLA and P5OH were observed by NMR.

A ratio of the P5OH unit and the repeating unit of PLA was determined by the integral ratio of NMR and found to be PSOH:PLA = 1:0.7 (mole ratio). The ratio was calculated from a ratio of the integral value of the hydrogen of b1 of PLA having a chemical shift at about 5.2 ppm (corresponding to one H atom) to the integral value of the hydrogen of a3 of P5OH having a chemical shift at about 3.6 ppm (corresponding to 10 H atoms).

### Example 2 (Composite of high-melting-point PLA and P5OH)

In a 5 mL glass tube, a solution obtained by dissolving 0.36 g (5 mmol) of high-melting-point PLA (PLLA) (melting point 180°C) in 1 mL of acetone and a solution obtained by dissolving 0.061 g (0.1 mmol) of P5OH serving as the cyclic compound in 1 mL of acetone were put, acetone was then removed by drying under vacuum, the temperature of the mixture was increased to 180°C to completely melt the mixture, and the mixture was allowed to stand still at 180°C for 15 hours and then cooled to room temperature to obtain a solid composite. The obtained composite was washed with 300 mL of trichloroethylene serving as a good solvent of PLLA and purified.

The composite after purification was dissolved in acetone d6 to measure ¹H-NMR, and as a result, peaks based on PLLA and P5OH were observed. FIG. 2 shows the results. For comparison, the results of PLA only and P5OH only are also shown.

### Comparative Example 1 (Composite of PBR and P5OH)

In a 5 mL glass tube, 0.27 g (5 mmol) of PBR (liquid polymer) was put, 0.061 g (0.1 mmol) of P5OH was then added as the cyclic compound at room temperature, and the mixture was allowed to stand still at room temperature for 15 hours to obtain a liquid mixture. The obtained mixture was washed with 30 mL of chloroform serving as a good solvent of PBR four times in total to obtain a purified product.

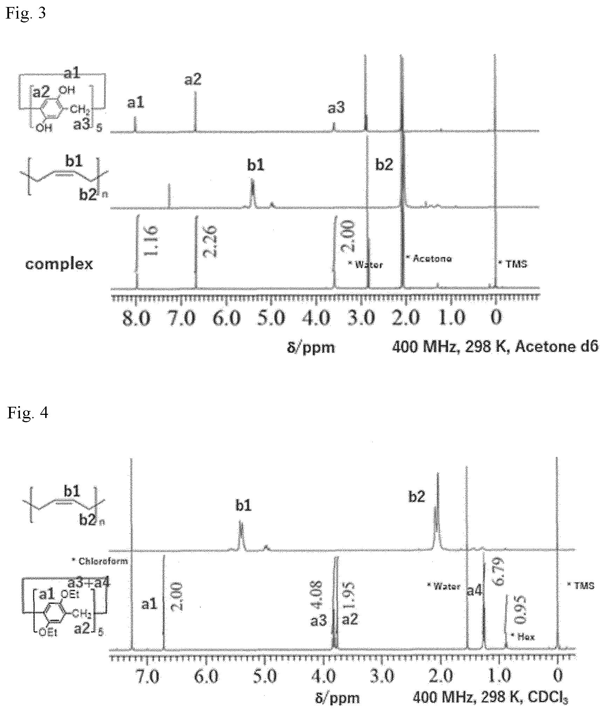

The purified product was dissolved in acetone d6 to measure ¹H-NMR, and as a result, peaks based on PBR were not observed and no composite was obtained. FIG. 3 shows the results. For comparison, the results of P5OH only and PBR only are also shown.

### Comparative Example 2 (Composite of PBR and C2P5A)

In a 5 mL glass tube, 0.27 g (5 mmol) of PBR (liquid polymer) was put, 0.089 g (0.1 mmol) of C2P5A was then added as the cyclic compound at room temperature, and the mixture was allowed to stand still at room temperature for 15 hours to obtain a liquid mixture. The obtained mixture was washed with 30 mL of hexane serving as a good solvent of PBR four times in total to obtain a purified product.

The purified product was dissolved in chloroform d to measure ¹H-NMR, and as a result, peaks based on PBR were not observed and no composite was obtained. FIG. 4 shows the results. For comparison, the results of PBR only are also shown.

### Example 3 (Composite of PLA and P5OH solution method)

In a 5 mL sample tube, 0.118 g (1.6 mmol) of PLA and 0.01 g (0.016 mmol) of P5OH were put, 2 g of dichloromethane was added as a solvent, and the mixture was uniformly dissolved using an ultrasonic cleaning machine. The mixture was concentrated using a rotary evaporator under the conditions of 40°C and then dried under vacuum at 50°C to obtain a composite.

### Example 4 (composite of PLA and PSOH, solution method)

A composite was obtained by the same operation as in Example 3 by changing the amount of P5OH as shown in the following table.

**[Table 1]**

| | **Amount mixed** | | **Polymer:cyclic compound** | |
|---|---|---|---|---|
| | **Polymer** | **Cyclic compound** | **Mole ratio** | **Mass ratio** |
| | **PLA** | **P5OH** | | |
| **Example 3** | **118 mg** | **10 mg** | **100:1** | **92.2:7.8** |
| **Example 4** | **236 mg** | **10 mg** | **200:1** | **95.9:4.1** |

### Examples 5 to 7 (composites of PeC and P5Q, solution method)

PeC was used instead of PLA, and P5Q was used instead of P5OH. The amount ratios therebetween were in accordance with the following table, and composites were obtained by the same operation as in Example 3.

**[Table 2]**

| | **Amount mixed** | | **Polymer:cyclic compound** | |
|---|---|---|---|---|
| | **Polymer** | **Cyclic compound** | **Mole ratio** | **Mass ratio** |
| | **PeC** | **P5Q** | | |
| **Example 5** | **95 mg** | **10 mg** | **50:1** | **90.5:9.5** |
| **Example 6** | **190 mg** | **10 mg** | **100:1** | **95:5** |
| **Example 7** | **380 mg** | **10 mg** | **200:1** | **97.4:2.6** |

### Examples 8 to 11 (composites of PeC and P5OH, solution method)

PeC was used instead of PLA, the amount ratios therebetween were in accordance with the following table, and composites were obtained by the same operation as in Example 3.

**[Table 3]**

| | **Amount mixed** | | **Polymer:cyclic compound** | |
|---|---|---|---|---|
| | **Polymer** | **Cyclic compound** | **Mole ratio** | **Mass ratio** |
| | **PeC** | **P5OH** | | |
| **Example 8** | **93.4 mg** | **10 mg** | **50:1** | **90:10** |
| **Example 9** | **187 mg** | **10 mg** | **100:1** | **94.9:5.1** |
| **Example 10** | **374 mg** | **10 mg** | **200:1** | **97.4:2.6** |
| **Example 11** | **934 mg** | **10 mg** | **500:1** | **98.9:1.1** |

### Example 12 Comparison of pyrolysis temperatures by TGA

The pyrolysis temperatures of the composites obtained in Examples 3 to 11 were obtained by a TGA method. Here, a 5 mass% reduced temperature was regarded as the pyrolysis temperature as described above.

In order for comparison, the pyrolysis temperatures of PeC alone and PLA alone, and differences in pyrolysis temperature therebetween are shown in the table.

**[Table 4]**

| | **Composition (wt%)** | | **Pyrolysis temperature** | **Difference in pyrolysis temperature from PLA alone** |
|---|---|---|---|---|
| | **PLA** | **P5OH** | **°C** | **°C** |
| **Example 3** | **92.2** | **7.8** | **293** | **42** |
| **Example 4** | **95.9** | **4.1** | **284** | **33** |
| **only PLA** | **100.0** | **0.0** | **251** | **-** |

**[Table 5]**

| | **Composition (mass%)** | | **Pyrolysis temperature** | **Difference in pyrolysis temperature from PeC alone** |
|---|---|---|---|---|
| | **PeC** | **P5Q** | **°C** | **°C** |
| **Example 19** | **90.5** | **9.5** | **350** | **106** |
| **Example 20** | **95.0** | **5.0** | **356** | **112** |
| **Example 21** | **97.4** | **2.6** | **354** | **110** |
| **only PeC** | **100.0** | **0.0** | **244** | **-** |

**[Table 6]**

| | **Composition (mass%)** | | **Pyrolysis temperature** | **Difference in pyrolysis temperature from PeC alone** |
|---|---|---|---|---|
| | **PeC** | **P5OH** | **°C** | **°C** |
| **Example 8** | **90.3** | **9.7** | **346** | **102** |
| **Example 9** | **94.9** | **5.1** | **345** | **101** |
| **Example 10** | **97.4** | **2.6** | **344** | **100** |
| **Example 11** | **98.9** | **1.1** | **340** | **96** |
| **only PeC** | **100.0** | **0.0** | **244** | - |

### Reference Example 1

The pyrolysis temperatures of P5Q alone and C2P5A alone, which are cyclic compounds, were obtained by the TGA method.

The results are shown in the following table.

**[Table 7]**

| **Cyclic compound** | **Pyrolysis temperature** |
|---|---|
| **P5Q** | **263 °C** |
| **C2P5A** | **370 °C** |

### Example 13

As a polymer, 10 mg of PVDF1 was weighed in a 5 mL sample bottle and heated to 200°C. PVDF1 was put into a molten state, C2P5A was added thereto as a cyclic compound in an amount shown in Table 2, and both components were sufficiently brought into contact with each other using a spatula at 200°C, held at 150°C for two hours, and returned to room temperature, thereby obtaining each composite. DSC and X-ray diffraction of the resultant composite were measured. The blending ratios and the kinds are summarized and shown in the following table.

**[Table 8]**

| **Amounts mixed** | | **Composition** of mixture **(mass%)** | |
|---|---|---|---|
| **Polymer** | **Cyclic compound** | **Polymer** | **Cyclic compound** |
| **PVDF1 (VP832)** | **C2P5A** | **PVDF1 (VP832)** | **C2P5A** |
| **10 mg** | **157 mg** | **6** | **94** |
| **10 mg** | **150 mg** | **10** | **90** |
| **10 mg** | **117 mg** | **30** | **70** |
| **10 mg** | **87 mg** | **50** | **50** |
| **10 mg** | **50 mg** | **70** | **30** |

### Example 14

Each composite was obtained in the same manner as in Example 13 except that the polymer was changed to PVDF2 (HSV900) and the amount of the cyclic compound was changed as shown in the following table. DSC and X-ray diffraction of the resultant composite were measured.

**[Table 9]**

| **Amounts mixed** | | **Composition of mixture (mass%)** | |
|---|---|---|---|
| **Polymer** | **Cyclic compound** | **Polymer** | **Cyclic compound** |
| **PVDF2 (HSV900)** | **C2P5A** | **PVDF2 (HSV900)** | **C2P5A** |
| **10 mg** | **157 mg** | **6** | **94** |
| **10 mg** | **150 mg** | **10** | **90** |
| **10 mg** | **141 mg** | **15** | **85** |
| **10 mg** | **133 mg** | **20** | **80** |
| **10 mg** | **125 mg** | **25** | **75** |
| **10 mg** | **117 mg** | **30** | **70** |
| **10 mg** | **83 mg** | **50** | **50** |
| **10 mg** | **50 mg** | **70** | **30** |

### Example 15

Each composite was obtained in the same manner as in Example 13 except that the cyclic compound was changed to C5P5A. DSC and X-ray diffraction of the resultant composite were measured.

**[Table 10]**

| **Amounts mixed** | | **Composition of mixture (mass%)** | |
|---|---|---|---|
| **Polymer** | **Cyclic compound** | **Polymer** | **Cyclic compound** |
| **PVDF1 (VP832)** | **C2P5A** | **PVDF1 (VP832)** | **C2P5A** |
| **10 mg** | **157 mg** | **6** | **94** |
| **10 mg** | **150 mg** | **10** | **90** |
| **10 mg** | **117 mg** | **30** | **70** |
| **10 mg** | **83 mg** | **50** | **50** |
| **10 mg** | **50 mg** | **70** | **30** |

### Example 16

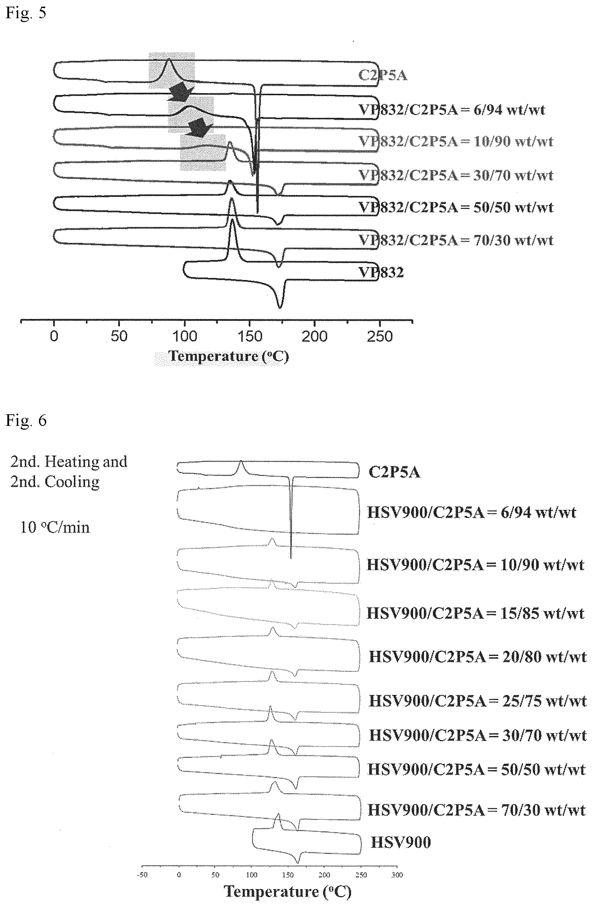

The results of DSC measurement performed on the individual composites obtained in Example 13 and the results of DSC measurement performed on C2P5A alone and PVDF1 alone, as comparison data, are shown in Fig. 5.

From these results, it is found that as the amount of C2P5A added increases, the melting point of PVDF1 (VP832) further disappears. This is considered to be because the crystallization of PVDF itself was hindered due to C2P5A included.

In addition, it is found that when the amount of PVDF1 increases, the crystallization temperature of C2P5A also shifts toward high temperatures, and the melting point also disappears. This is considered to be because due to C2P5A included, the temperature necessary for crystallization becomes higher, and crystallization becomes impossible in the end.

### Example 17

The results of DSC measurement performed on the individual composites obtained in Example 14 and the results of DSC measurement performed on C2P5A alone and PVDF2 alone, as comparison data, are shown in Fig. 6. In Example 7, compared with Example 6, the polymer was changed from PVDF1 (VP832) to PVDF2 (HSV900) having a low melting point, but the results were the same as those in Example 2, melting point disappearance of PVDF2 and melting point disappearance of C2P5A were observed, and generation of a clathrate compound was suggested.

### Example 18

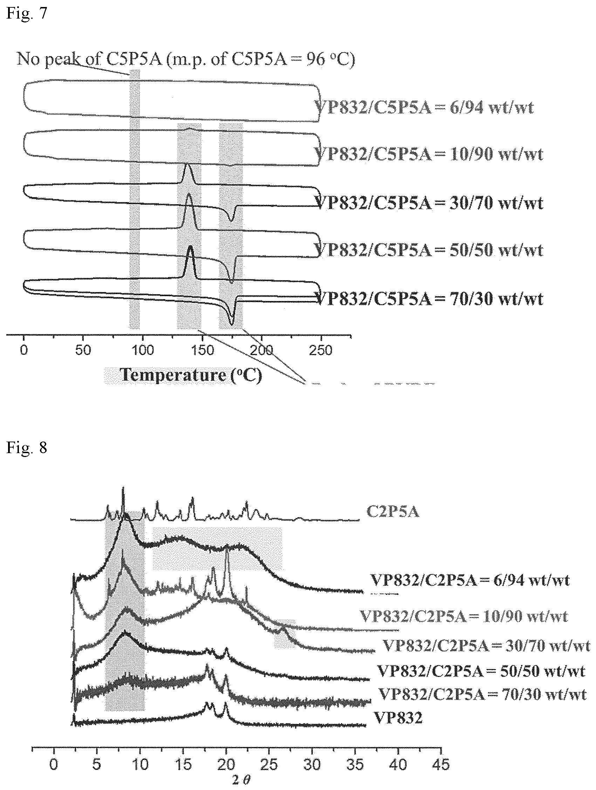

The results of DSC measurement performed on the individual composites obtained in Example 15 are shown in Fig. 7. In Example 8, compared with Example 6, the cyclic compound was changed from C2P5A to C5P5A, but the results were the same, melting point disappearance of PVDF1 and melting point disappearance of C5P5A were observed, and generation of a clathrate compound was suggested.

### Example 19

The results of X-ray diffraction measurement performed on the individual composites obtained in Example 13 and the results of X-ray diffraction measurement performed on C2P5A alone and PVDF1 alone, as comparison data, are shown in Fig. 8.

Similar to the results of DSC, as the amount of C2P5A added to PVDF1 (VP832) alone increased, diffraction peaks that show the crystallinity of PVDF1 further disappeared.

In addition, it was possible to newly confirm a new long period structure at 20 = near 8° due to the addition of C2P5A. When analysis is made with an assumption that the new long period structure is the interplanar spacing of C2P5A included in PVDF1, it can be said that one C2P5A has been intercalated into approximately four repeating structural units (monomer units) of PVDF1.

### Example 20

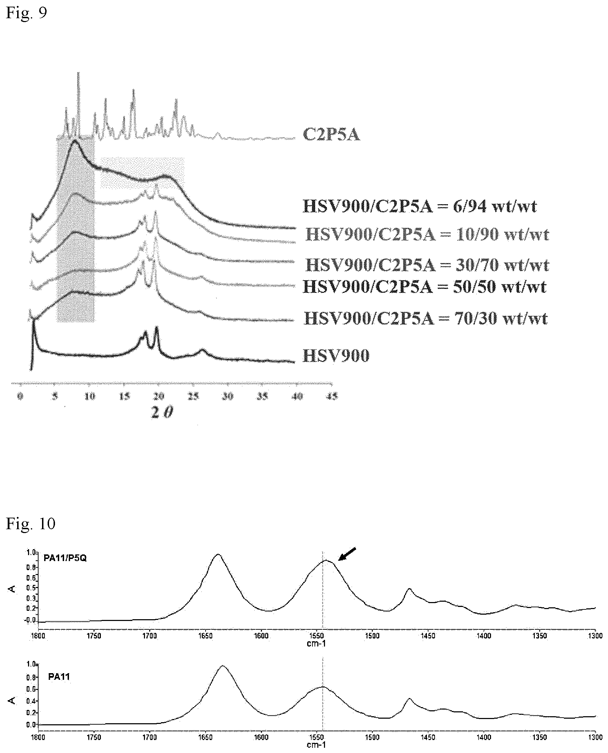

The results of X-ray diffraction measurement performed on the individual composites obtained in Example 14 and the results of X-ray diffraction measurement performed on C2P5A alone and PCDF2 alone, as comparison data, are shown in Fig. 9.

As in DSC, the kind of the polymer was changed from PVDF1 (VP832) to PVDF2 (HSV900); however, similar to the results of DSC, as the amount of C2P5A added to PVDF2 (HSV900) alone increased, diffraction peaks that show the crystallinity of PVDF further disappeared.

In addition, it was possible to newly confirm a new long period structure at 20 = near 8° due to the addition of C2P5A. When analysis is made with an assumption that the new long period structure is the interplanar spacing of C2P5A included in PVDF2, it can be said that one C2P5A has been intercalated into approximately four repeating structural units (monomer units) of PVDF2.

### Example 21

Examination of PA11/P5Q
Examination of Polyamide 11 (purchased from Sigma-Ardrich as a reagent) (PA11) and P5Q

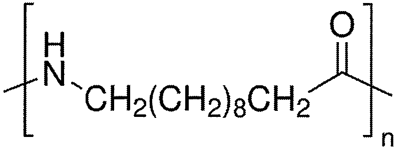

### (Examination of kneading)

Using a loop type twin-screw extruder (Xplore MC15HT: manufactured by Xplore Instruments), kneading of 10.30 g of PA11 and 0.21 g of P5Q were examined. The materials were dry blended in advance, then fed from a hopper, and kneaded under the conditions of 240°C for 3 min at 200 rpm. After kneading, the sample was collected as strands. The melting point of PA11 used was 189.7°C.

### (Evaluation of pyrolysis temperature)

The 5% weight loss temperature (Td5) of the strands was evaluated by the TGA method.

**[Table 11]**

| **Sample** | **Td5 (°C)** |
|---|---|
| **PA11 only** | **382** |
| **PA11/P5Q** | **379** |
| **P5Q only** | **263** |

### (FT-IR Measurement)

As shown in FIG. 10, in PA11/P5Q, 1540 cm⁻¹:amide C-N-H bending was shifted to the low wavenumber side as compared with that of PA11. Accordingly, the interaction of amide of PA11 with C=O of P5Q was demonstrated.

## Claims

1. A composite comprising: a polymer; and one or more cyclic compounds that comprise the polymer, wherein
the polymer has at least one selected from a glass transition temperature and a melting point at 130°C or higher,
the cyclic compound comprises a compound represented by the following formula (I): 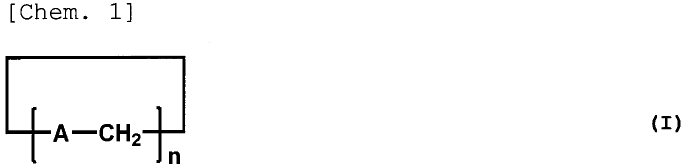 wherein
A independently represents a divalent C₄₋₅₀ organic group containing one or more selected from -OR and -CO-,
R independently represents an organic group optionally containing one or more fluorine atoms, or a hydrogen atom, and
n represents an integer of 4 to 20.

2. The composite according to claim 1, wherein the cyclic compound comprises a compound represented by any of the following formulae (1) to (3): 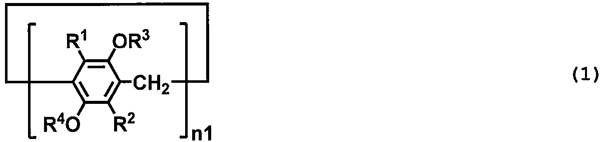 wherein
R¹ independently represents a hydrogen atom or an organic group,
R² independently represents a hydrogen atom or an organic group,
R³ independently represents a hydrogen atom or an organic group,
R⁴ independently represents a hydrogen atom or an organic group, and
n1 is an integer of 4 to 20, 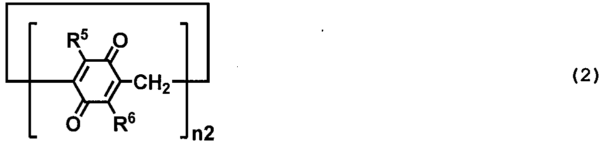 wherein
R⁵ independently represents a hydrogen atom or an organic group,
R⁶ independently represents a hydrogen atom or an organic group, and
n2 is an integer of 4 to 20, 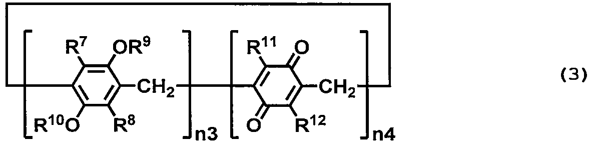 wherein
R⁷ independently represents a hydrogen atom or an organic group,
R⁸ independently represents a hydrogen atom or an organic group,
R⁹ independently represents a hydrogen atom or an organic group,
R¹⁰ independently represents a hydrogen atom or an organic group,
R¹¹ independently represents a hydrogen atom or an organic group,
R¹² independently represents a hydrogen atom or an organic group,
n3 is an integer of 1 to 19,
n4 is an integer of 1 to 19,
a sum of n3 and n4 is 4 to 20, and
an occurrence order of a unit in parentheses with n3 or n4 is arbitrary in the formula (3).

3. The composite according to claim 2, wherein in the formula (1), one or more selected from R¹ to R⁴ is a fluorine-containing organic group.

4. The composite according to claim 2 or 3, wherein in the formula (1), one or more selected from R³ and R⁴ is a hydrogen atom.

5. The composite according to any one of claims 1 to 4, wherein the cyclic compound is a compound represented by any of the following formulae (1-A), (2-A), and (3-A): 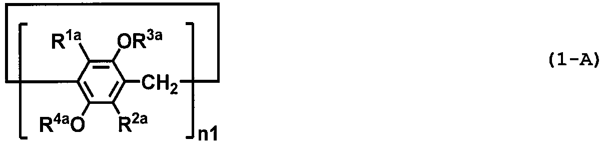 wherein
R^{1a} independently represents a C₁₋₃₀ alkyl group optionally having one or more substituents, or a hydrogen atom,
R^{2a} independently represents a C₁₋₃₀ alkyl group optionally having one or more substituents, or a hydrogen atom,
R^{3a} independently represents a C₁₋₃₀ alkyl group optionally having one or more substituents, or a hydrogen atom,
R^{4a} independently represents a C₁₋₃₀ alkyl group optionally having one or more substituents, or a hydrogen atom, and
n1 is an integer of 4 to 20, 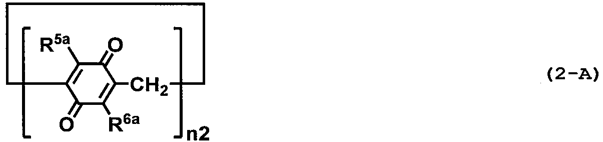 wherein
R^{5a} independently represents a C₁₋₃₀ alkyl group optionally having one or more substituents, or a hydrogen atom,
R^{6a} independently represents a C₁₋₃₀ alkyl group optionally having one or more substituents, or a hydrogen atom, and
n2 is an integer of 4 to 20, 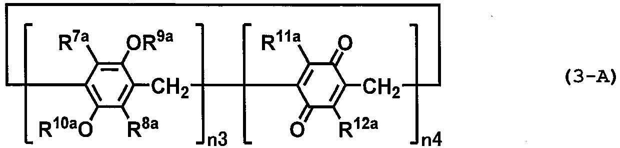 wherein
R^{7a} independently represents a C₁₋₃₀ alkyl group optionally having one or more substituents, or a hydrogen atom,
R^{8a} independently represents a C₁₋₃₀ alkyl group optionally having one or more substituents, or a hydrogen atom,
R^{9a} independently represents a C₁₋₃₀ alkyl group optionally having one or more substituents, or a hydrogen atom,
R^{10a} independently represents a C₁₋₃₀ alkyl group optionally having one or more substituents, or a hydrogen atom,
R^{11a} independently represents a C₁₋₃₀ alkyl group optionally having one or more substituents, or a hydrogen atom,
R^{12a} independently represents a C₁₋₃₀ alkyl group optionally having one or more substituents, or a hydrogen atom,
n3 is an integer of 1 to 19,
n4 is an integer of 1 to 19, and
a sum of n3 and n4 is 4 to 20,
provided that an occurrence order of a unit in parentheses with n3 or n4 is arbitrary in the formula (3-A).

6. The composite according to any one of claims 1 to 5, wherein the cyclic compound has a pyrolysis temperature at 250°C or higher.

7. The composite according to any one of claims 1 to 6, wherein the polymer has at least one selected from a glass transition temperature and a melting point at 140°C or higher.

8. The composite according to any one of claims 1 to 7, wherein the polymer is a linear polymer optionally having a substituent.

9. The composite according to any one of claims 1 to 8, wherein the polymer is a linear polymer having one selected from the group consisting of a carbonyl group, an ester group, an amide group, an imide group, and an ether group in a repeating structural unit.

10. The composite according to any one of claims 1 to 9, wherein the polymer is a linear polymer having an aromatic ring in a repeating structural unit.

11. The composite according to any one of claims 1 to 10, wherein the polymer contains a polyester.

12. The composite according to any one of claims 1 to 11, wherein the polymer contains a fluorine-containing polymer.

13. The composite according to any one of claims 1 to 12, wherein the polymer contains polyvinylidene fluoride.

14. The composite according to any one of claims 1 to 13, wherein a pyrolysis temperature is 170°C or higher.

15. The composite according to any one of claims 1 to 14, wherein tₓ - t_{y} is 50°C or more, where tₓ indicates a pyrolysis temperature of the composite, and t_{y} indicates a lower one of a pyrolysis temperature of the polymer and a pyrolysis temperature of the cyclic compound.

16. The composite according to any one of claims 1 to 15, wherein a proportion of the cyclic compound is 0.01 mass% or more and 99 mass% or less in a total of 100 parts by mass of the polymer and the cyclic compound.

17. A method for producing the composite according to any one of claims 1 to 16, the method comprising:
contacting the polymer and the cyclic compound represented by the formula (I) with each other in an absence of a solvent to obtain the composite.

18. The production method according to claim 17, wherein the contacting is performed at a temperature higher than at least one of a glass transition temperature and a melting point of the polymer.

19. A composition comprising the composite according to any one of claims 1 to 16.

20. The composition according to claim 19, which is in a powder form.

21. The composition according to claim 19, which is in a liquid form.
